# EUROPEAN PATENT APPLICATION

(11) **EP 4 836 556 A1**
(43) Date of publication of application: **04.11.2026**
(21) Application number: 24911537.9
(22) Date of filing: 27.12.2024
(51) Int. Cl.: H04W 72/044, H04W 56/00

(54) **SSB CONFIGURATION METHOD AND APPARATUS, AND NETWORK-SIDE DEVICE**

(30) Priority: 28.12.2023 CN 202311844747
(71) Applicant: Vivo Mobile Communication Co., Ltd., Dongguan, Guangdong 523863 (CN)
(72) Inventor: LIN, Zhipeng, Dongguan, Guangdong 523863 (CN); LIU, Siqi, Dongguan, Guangdong 523863 (CN)
(74) Representative: Shieldmark
(86) International application number: PCT/CN2024/143358
(87) International publication number: WO 2025/140621

(57) **Abstract**

This application provides an SSB configuration method and apparatus, and a network-side device, and relates to the communication field. The SSB configuration method includes: receiving, by a terminal, at least one SSB configuration from a network-side device; where the at least one SSB configuration includes at least one of the following: a first SSB configuration for configuring an SSB resource, a second SSB configuration for configuring an SSB used for radio resource management RRM measurement, and a third SSB configuration for configuring an SSB transmission power. A configuration mode of the at least one SSB configuration includes at least one of the following: a first configuration mode based on an SSB index, a second configuration mode based on an SSB index group, or a third configuration mode based on a plurality of first time units within a first time window.

## Description

### CROSS-REFERENCE TO RELATED APPLICATIONS

This application claims priority to Chinese Patent Application No. 202311844747.0, filed with the China National Intellectual Property Administration on December 28, 2023 and entitled "SSB CONFIGURATION METHOD AND APPARATUS, AND NETWORK-SIDE DEVICE", which is incorporated herein by reference in its entirety.

### TECHNICAL FIELD

This application relates to the communication field, and in particular, to an SSB configuration method and apparatus, and a network-side device.

### BACKGROUND

In the 5th generation (5-Generation, 5G) mobile communication technology, the configuration of synchronization signal/PBCH block (Synchronization Signal/PBCH Block, SSB) resources can only be changed through radio resource control (Radio Resource Control, RRC) reconfiguration information.

In addition, different SSB indices have the same transmission periodicity and transmission power, and if an SSB index is not transmitted within a period, it cannot be transmitted within other periods, unless the system information is updated, which can change whether the SSB index is transmitted.

However, with the technology development, there is an urgent need in this field for a more flexible SSB configuration method.

### SUMMARY

Embodiments of this application provide an SSB configuration method and apparatus, and a network-side device, which can improve the flexibility of SSB configuration.

According to a first aspect, an SSB configuration method is provided, including:
receiving, by a terminal, at least one SSB configuration from a network-side device; where
the at least one SSB configuration includes at least one of the following:
   a first SSB configuration for configuring an SSB resource, a second SSB configuration for configuring an SSB used for radio resource management RRM measurement, and a third SSB configuration for configuring an SSB transmission power; where
   a configuration mode of the at least one SSB configuration includes at least one of the following:
      a first configuration mode based on an SSB index, a second configuration mode based on an SSB index group, or a third configuration mode based on a plurality of first time units within a first time window.

According to a second aspect, an SSB configuration method is provided, including:
sending, by a network-side device, at least one SSB configuration to a terminal; where
the at least one SSB configuration includes at least one of the following:
   a first SSB configuration for configuring an SSB resource, a second SSB configuration for configuring an SSB used for radio resource management RRM measurement, and a third SSB configuration for configuring an SSB transmission power; where
   a configuration mode of the at least one SSB configuration includes at least one of the following:
      a first configuration mode based on an SSB index, a second configuration mode based on an SSB index group, or a third configuration mode based on a plurality of first time units within a first time window.

According to a third aspect, an SSB configuration apparatus is provided, including:
a communication unit configured to receive at least one SSB configuration from a network-side device; where
the at least one SSB configuration includes at least one of the following:
   a first SSB configuration for configuring an SSB resource, a second SSB configuration for configuring an SSB used for radio resource management RRM measurement, and a third SSB configuration for configuring an SSB transmission power; where
   a configuration mode of the at least one SSB configuration includes at least one of the following:
      a first configuration mode based on an SSB index, a second configuration mode based on an SSB index group, or a third configuration mode based on a plurality of first time units within a first time window.

According to a fourth aspect, an SSB configuration apparatus is provided, including:
a communication unit configured to send at least one SSB configuration to a terminal; where
the at least one SSB configuration includes at least one of the following:
   a first SSB configuration for configuring an SSB resource, a second SSB configuration for configuring an SSB used for radio resource management RRM measurement, and a third SSB configuration for configuring an SSB transmission power; where
   a configuration mode of the at least one SSB configuration includes at least one of the following:
      a first configuration mode based on an SSB index, a second configuration mode based on an SSB index group, or a third configuration mode based on a plurality of first time units within a first time window.

According to a fifth aspect, a terminal is provided. The terminal includes a processor and a memory, where the memory stores a program or instructions capable of running on the processor, and when the program or instructions are executed by the processor, the steps of the method according to the first aspect are implemented.

According to a sixth aspect, a terminal is provided, including a processor and a communication interface. The communication interface is configured to receive at least one SSB configuration from a network-side device; where
the at least one SSB configuration includes at least one of the following:
a first SSB configuration for configuring an SSB resource, a second SSB configuration for configuring an SSB used for radio resource management RRM measurement, and a third SSB configuration for configuring an SSB transmission power; where
a configuration mode of the at least one SSB configuration includes at least one of the following:
   a first configuration mode based on an SSB index, a second configuration mode based on an SSB index group, or a third configuration mode based on a plurality of first time units within a first time window.

According to a seventh aspect, a network-side device is provided. The network-side device includes a processor and a memory, where the memory stores a program or instructions capable of running on the processor, and when the program or instructions are executed by the processor, the steps of the method according to the second aspect are implemented.

According to an eighth aspect, a network-side device is provided, including a processor and a communication interface. The communication interface is configured to send at least one SSB configuration to a terminal; where
the at least one SSB configuration includes at least one of the following:
a first SSB configuration for configuring an SSB resource, a second SSB configuration for configuring an SSB used for radio resource management RRM measurement, and a third SSB configuration for configuring an SSB transmission power; where
a configuration mode of the at least one SSB configuration includes at least one of the following:
   a first configuration mode based on an SSB index, a second configuration mode based on an SSB index group, or a third configuration mode based on a plurality of first time units within a first time window.

According to a ninth aspect, a readable storage medium is provided, where the readable storage medium stores a program or instructions, and when the program or instructions are executed by a processor, the steps of the method according to the first aspect are implemented, or the steps of the method according to the second aspect are implemented.

According to a tenth aspect, a wireless communication system is provided, including a terminal and a network-side device. The terminal may be configured to perform the steps of the method according to the first aspect, and the network-side device may be configured to perform the steps of the method according to the second aspect.

According to an eleventh aspect, a chip is provided. The chip includes a processor and a communication interface. The communication interface is coupled to the processor, and the processor is configured to run a program or instructions to implement the method according to the first aspect or the method according to the second aspect.

According to a twelfth aspect, a computer program/program product is provided, where the computer program/program product is stored in a storage medium, and the program/program product is executed by at least one processor to implement the steps of the method according to the first aspect or the steps of the method according to the second aspect.

In the embodiments of this application, the SSB configuration method includes: receiving, by a terminal, at least one SSB configuration from a network-side device; where the at least one SSB configuration includes at least one of the following: a first SSB configuration for configuring an SSB resource, a second SSB configuration for configuring an SSB used for RRM measurement, and a third SSB configuration for configuring an SSB transmission power. A configuration mode of the at least one SSB configuration includes at least one of the following: a first configuration mode based on an SSB index, a second configuration mode based on an SSB index group, or a third configuration mode based on a plurality of first time units within a first time window. This means that the SSB resource, the SSB used for RRM measurement, or the SSB transmission power can be flexibly configured with the granularity of the SSB index, the SSB index group, or the first time unit within the first time window, preventing the network from configuring the same periodicity and transmission power for different SSB indices, that is, improving the flexibility of SSB configuration.

### BRIEF DESCRIPTION OF DRAWINGS

To describe the technical solutions in the embodiments of this application more clearly, the following briefly describes the accompanying drawings required for describing the embodiments of this application. Apparently, the accompanying drawings in the following description show merely some embodiments of this application, and persons of ordinary skill in the art may derive other drawings from these accompanying drawings without creative efforts.
FIG. 1 is a schematic diagram of a communication system architecture according to an embodiment of this application;
FIG. 2 is an example of an SSB structure according to an embodiment of this application;
FIG. 3 is an example of PRACH frequency-domain resources according to an embodiment of this application;
FIG. 4 is an example of an association relationship between SSBs and ROs according to an embodiment of this application;
FIG. 5 is an example of RO groups according to an embodiment of this application;
FIG. 6 is a schematic flowchart of an SSB configuration method according to an embodiment of this application;
FIG. 7 is a schematic block diagram of an SSB configuration apparatus according to an embodiment of this application;
FIG. 8 is a schematic block diagram of another SSB configuration apparatus according to an embodiment of this application;
FIG. 9 is a schematic block diagram of a communication device according to an embodiment of this application;
FIG. 10 is a schematic diagram of a hardware structure of a terminal according to an embodiment of this application; and
FIG. 11 is a schematic block diagram of a network-side device according to an embodiment of this application.

### DESCRIPTION OF EMBODIMENTS

The following clearly describes the technical solutions in the embodiments of this application with reference to the accompanying drawings in the embodiments of this application. Apparently, the described embodiments are only some rather than all of the embodiments of this application. All other embodiments obtained by persons of ordinary skill in the art based on the embodiments of this application fall within the protection scope of this application.

The terms "first", "second", and the like in this application are used to distinguish between similar objects rather than to describe a specific order or sequence. It should be understood that the terms used in this way are interchangeable in appropriate circumstances such that the embodiments of this application can be implemented in other orders than the order illustrated or described herein. In addition, objects distinguished by "first" and "second" are generally of a same type, and the quantities of the objects are not limited. For example, there may be one or more first objects. In addition, "or" in this application represents at least one of connected objects. For example, "A or B" represents the following three cases: including A but not including B, including B but not including A, and including both A and B. The character "/" generally indicates an "or" relationship between the contextually associated objects.

The term "indicate" in this application may be a direct indication (or explicit indication) or an indirect indication (or implicit indication). The direct indication can be understood as that the sender explicitly informs the receiver of specific information, operations to be performed, or requested results in the sent indication. The indirect indication can be understood as that the receiver determines corresponding information based on the indication sent by the sender, or makes a judgment and determines operations to be performed or requested results based on the judgment result.

It should be noted that technologies described in the embodiments of this application are not limited to long term evolution (Long Term Evolution, LTE) or LTE-advanced (LTE-Advanced, LTE-A) systems, and may also be applied to other wireless communication systems, for example, code division multiple access (Code Division Multiple Access, CDMA), time division multiple access (Time Division Multiple Access, TDMA), frequency division multiple access (Frequency Division Multiple Access, FDMA), orthogonal frequency division multiple access (Orthogonal Frequency Division Multiple Access, OFDMA), single-carrier frequency-division multiple access (Single-carrier Frequency-Division Multiple Access, SC-FDMA), or other systems. The terms "system" and "network" in the embodiments of this application are often used interchangeably, and the technology described herein may be used in the above-mentioned systems and radio technologies as well as other systems and radio technologies. In the following descriptions, a new radio (New Radio, NR) system is described for illustration purposes, and NR terms are used in most of the following descriptions, although these technologies may also be applied to other systems than the NR system, for example, the 6th generation (6th Generation, 6G) communication system.

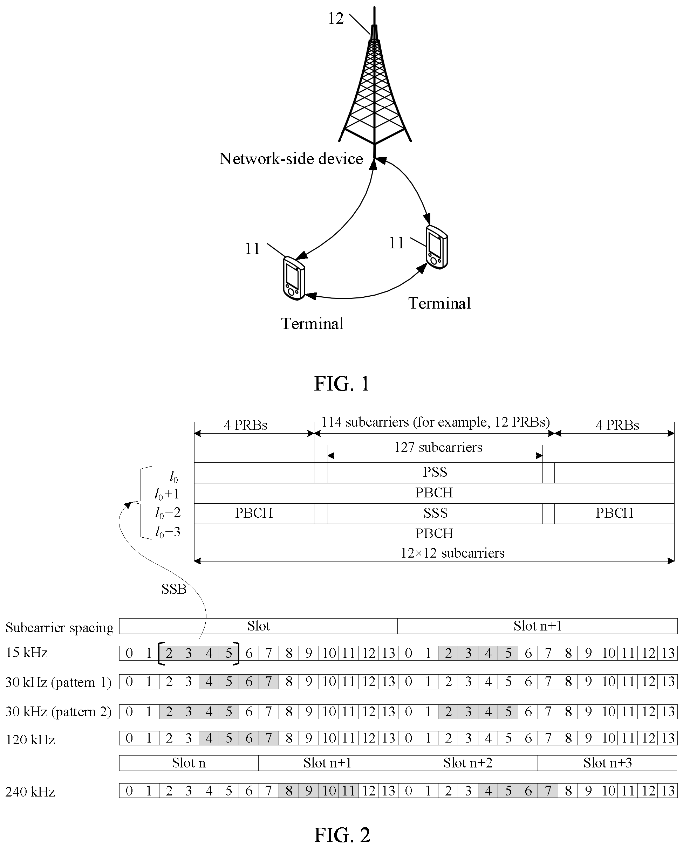

FIG. 1 is a schematic diagram of a communication system architecture according to an embodiment of this application.

As shown in FIG. 1, the communication system architecture includes a terminal 11 and a network-side device 12.

The terminal 11 may be a terminal-side device, such as a mobile phone, a tablet personal computer (Tablet Personal Computer), a laptop computer (Laptop Computer), a notebook computer, a personal digital assistant (Personal Digital Assistant, PDA), a palmtop computer, a netbook, an ultra-mobile personal computer (Ultra-mobile Personal Computer, UMPC), a mobile internet device (Mobile Internet Device, MID), an augmented reality (Augmented Reality, AR) device, a virtual reality (Virtual Reality, VR) device, a robot, a wearable device (Wearable Device), a flight vehicle (flight vehicle), vehicle user equipment (Vehicle User Equipment, VUE), a shipborne device, pedestrian user equipment (Pedestrian User Equipment, PUE), a smart appliance (a home appliance with a wireless communication function, for example, a refrigerator, a television, a washing machine, or furniture), a game console, a personal computer (Personal Computer, PC), a teller machine, or a self-service machine. The wearable device includes a smart watch, a smart band, a smart earphone, smart glasses, smart jewelry (a smart bangle, a smart bracelet, a smart ring, a smart necklace, a smart ankle bangle, a smart anklet, or the like), a smart wristband, smart clothing, or the like. The vehicle user equipment may also be referred to as a vehicle terminal, a vehicle controller, a vehicle module, a vehicle component, a vehicle chip, a vehicle unit, or the like. It should be noted that the terminal 11 is not limited to any specific type in the embodiments of this application.

The network-side device 12 may include an access network device or a core network device.

The access network device may also be referred to as a radio access network (Radio Access Network, RAN) device, a radio access network function, or a radio access network unit. The access network device may include a base station, a wireless local area network (Wireless Local Area Network, WLAN) access point (Access Point, AP), a wireless fidelity (Wireless Fidelity, WiFi) node, or the like. The base station may be referred to as a NodeB (Node B, NB), an evolved NodeB (Evolved Node B, eNB), the next generation NodeB (the next generation Node B, gNB), a new radio NodeB (New Radio Node B, NR Node B), an access point, a relay base station (Relay Base Station, RBS), a serving base station (Serving Base Station, SBS), a base transceiver station (Base Transceiver Station, BTS), a radio base station, a radio transceiver, a basic service set (Basic Service Set, BSS), an extended service set (Extended Service Set, ESS), a home NodeB (home Node B, HNB), a home evolved NodeB (home evolved Node B), a transmission reception point (Transmission Reception Point, TRP), or other appropriate terms in the art. Provided that the same technical effects are achieved, the base station is not limited to any specific technical term. It should be noted that in the embodiments of this application, only the base station in the NR system is used as an example for description, although the specific type of the base station is not limited.

For better understanding of the embodiments of this application, the technologies related to this application are described.
(1) Synchronization signal and physical broadcast channel (Physical Broadcast Channel, PBCH).

FIG. 2 is an example of an SSB structure according to an embodiment of this application.

As shown in FIG. 2, a terminal first detects a primary synchronization signal (Primary Synchronization Signal, PSS) to obtain a part of a physical cell identifier (ID), namely N(2)_ID, obtains orthogonal frequency division multiplexing (Orthogonal Frequency Division Multiplexing, OFDM) symbol timing and frequency synchronization, and then detects a secondary synchronization signal (Secondary Synchronization Signal, SSS) to obtain another part of the physical cell ID, namely N(1)_ID, to obtain a complete physical cell ID, namely a physical cell identifier (Physical Cell Identifier, PCI). Then, the terminal detects the PBCH and a demodulation reference signal (Demodulation Reference Signal, DMRS) for demodulating the PBCH, to obtain a system frame number (System Frame Number) and an SSB index, and further obtain radio frame (radio frame) timing.

In other words, to enable the terminal to search for a suitable cell and synchronize with the selected cell, the network usually needs to broadcast synchronization signals and provide certain master information about the cell. The synchronization signals mainly include the PSS and SSS. The most important system information carried by the PBCH may also be referred to as a master information block (Master Information Block, MIB).

(2) Mapping rules from SSB to RO in 5G NR.

Physical random access channel (Physical Random Access Channel, PRACH) resources and SSB-RO configuration parameters are configured in a system information block SIB 1. In the NR, a cell can configure a plurality of physical random access channel transmission occasions (PRACH transmission occasion, PRACH Occasion, RO) frequency-division multiplexed (FDM) at a time-domain position for PRACH transmission. At a time instant, the number of ROs FDMed may be {1,2,4,8}, which is configured and determined by a higher-layer parameter msg1-FDM.

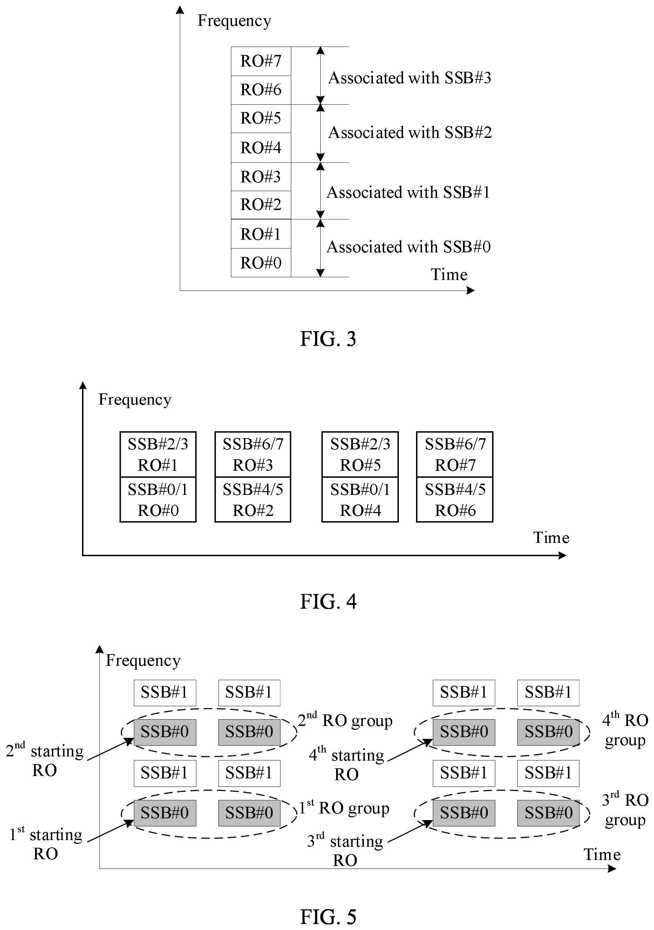

A random access preamble (Preamble) can only be transmitted on time-domain resources configured by the parameter PRACHConfigurationIndex and frequency-domain resources configured by the parameter msg1-FDM. For a PRACH frequency-domain resource *n_{RA}* ∈ {0,1, ... , M - 1}, M is equal to the higher-layer parameter msg1-FDM. During initial access, the PRACH frequency-domain resource *n_{RA}* is numbered in ascending order starting from the lowest-frequency RO resource within the initial active uplink bandwidth part (initial active uplink bandwidth part); otherwise, the PRACH frequency-domain resource *n_{RA}* is numbered in ascending order starting from the lowest-frequency RO resource within the active uplink bandwidth part (active uplink bandwidth part). For example, as shown in FIG. 3, the number of ROs frequency-division multiplexed (frequency division multiplexing, FDM) at a time instant may be 8 (msg1-FDM = 8), and the RO resources are numbered by frequency in ascending order from RO#0 to RO#7.

In the NR, there is an association relationship between ROs and actually transmitted SSBs. ROs are associated with SSBs in the order of frequency domain first (from the low frequency to the high frequency) and then time domain. One SSB may be associated with a plurality of consecutive ROs, or a plurality of SSBs may be associated with one RO (in this case, different SSBs correspond to different preambles), which is configured by the network via the parameter ssb-perRACH-OccasionAndCB-PreamblesPerSSB. For example, oneEighth indicates that one SSB is associated with eight consecutive ROs, and eight indicates that eight SSBs are associated with one RO. {n4, n8, n12, ...} indicates the number of preambles associated with each SSB on one RO. For example, the value n4 indicates that the number of preambles associated with each SSB on one RO is 4, and the value n8 indicates that the number of preambles associated with each SSB on one RO is 8.

After all SSBs are associated with ROs for one round, an SSB-RO mapping cycle (SSB-RO mapping cycle) is formed. An association period (association period) from SSBs to ROs may include one or more SSB-RO mapping cycles. An association pattern period (association pattern period) from SSBs to ROs may include one or more SSB-RO association periods, and the mapping from SSBs to ROs is repeated periodically with the association pattern period, with the maximum association pattern period being 160 ms.

Typically, a base station can use different beams to transmit different SSBs, where the number of SSBs is configured by the parameter ssb-PositionsInBurst, and for FR2, the maximum number of SSBs is 64. Based on the strength of the received downlink beams/SSBs, the UE selects the RO/"RO and preamble combination" associated with the SSB with good signal strength for Msg1 transmission. In this way, the network can determine the SSB selected by the UE based on the received RO/"RO and preamble combination" of the preamble, and transmit Msg2 on the downlink beam corresponding to the SSB to ensure the reception quality of the downlink signal.

Taking FIG. 3 as an example, the number of ROs FDMed at a time instant is 8, and the number of actually transmitted SSBs is 4, namely SSB#0, SSB#1, SSB#2, and SSB#3, with each SSB associated with 2 ROs. If the UE determines to transmit the PRACH/Msgl on the RO corresponding to SSB#0, the UE selects one RO from RO#0 and RO#1 for PRACH transmission.

Taking FIG. 4 as an example, the number of ROs FDMed at a time instant is 2, and the number of actually transmitted SSBs is 8, namely SSB#0, SSB#1, ..., and SSB#7, with every 2 SSBs associated with 1 RO. When a plurality of SSBs share one RO, preamble sets associated with the plurality of SSBs are different, meaning that the same preamble cannot simultaneously belong to preamble sets associated with different SSBs. Taking RO#0 in FIG. 4 as an example, RO#0 has a total of 60 preambles, where preambles with indices 0 to 29 are associated with SSB#0, and preambles with indices 30 to 59 are associated with SSB#1.

It is worth noting that in FIG. 4, each square represents an RO, not an SSB, and the marked SSB refers to the SSB(s) the RO is associated with.

Before transmitting the PRACH, the UE first selects an SSB whose reference signal receiving power (Reference Signal Receiving Power, RSRP) is higher than a threshold based on the RSRPs of the received beams (beam). If RSRPs of a plurality of SSBs are higher than the threshold, the terminal can select any SSB whose RSRP is higher than the threshold. If there is no SSB whose RSRP is higher than the threshold, the UE selects an SSB based on implementation.

Based on the NW (Network) configuration, the UE obtains the correspondence between SSBs and ROs. After an SSB is selected, the RO corresponding to the selected SSB is used as the RO for PRACH/Preamble/Msgl transmission. If the selected SSB is associated with a plurality of ROs, the terminal can select one of the ROs for PRACH/Preamble/Msg1 transmission.

Taking FIG. 3 as an example, if the UE selects SSB#1, the UE can select one from RO#2 and RO#3 for PRACH/Msgl transmission. Taking FIG. 4 as an example, if the UE selects SSB#1, the UE can select the available RO that is closest to the current time from the ROs (RO#0 or 4) associated with SSB#1 for PRACH/Msgl transmission. In the selected RO, the UE selects a preamble from the preamble set associated with the selected SSB for PRACH transmission. As shown in FIG. 4, when one RO is associated with two SSBs, preambles in the available preamble set associated with the SSBs in one RO are divided into two subsets, each subset corresponding to one SSB. The UE selects a preamble from the preamble subset corresponding to the selected SSB for PRACH/Msgl transmission.

(3) Determination of RO set during PRACH repetition.

PRACH repetition is introduced in Rel-18 to enhance uplink coverage. For PRACH repetition, the UE needs to repeatedly transmit preambles on a plurality of ROs at different time-domain positions associated with the same SSB, and the number of repetitions may be {2, 4, 8}. After determining the number of PRACH repetitions, the UE needs to determine an RO set, where the number of valid ROs in the RO set is equal to the number of PRACH repetitions. Assuming the number of PRACH repetitions is N, the rule for determining the RO group (group) is as follows: first determine the starting RO (starting RO) of the RO group, and then determine the remaining N-1 ROs of the RO group. The remaining N-1 ROs of each RO group are ROs that are associated with the same SSB, have the same frequency position, and are associated with the same preamble set as the starting RO (starting RO). For example, as shown in FIG. 5, assuming the number of PRACH repetitions is 2, for SSB#0, the starting RO of the RO group is first determined, and then the remaining one RO of the RO group is determined. The remaining one RO of each RO group is an RO that is associated with the same SSB#0, has the same frequency position, and is associated with the same preamble set as the starting RO.

In the 5G network, SSB configuration is configured by the system information, and only RRC reconfiguration information can be used to change SSB resource configuration.

In addition, different SSB indices have the same transmission periodicity and transmission power. If an SSB index is not transmitted within one period, it cannot be transmitted within other periods, unless the system information is updated, which can change whether the SSB index is transmitted.

In the embodiments, considering that the load (load) of the system may differ for different SSB indices or SSB index groups, the required SSB resources need to be flexibly configured. In addition, the desired coverage and the corresponding required transmission power may also differ for different SSB indices or SSB index groups.

In view of this, the embodiments of this application provide an SSB configuration method, which can improve the flexibility of SSB configuration.

It is worth noting that the SSB involved in this application may also be referred to as any module that includes at least one of a synchronization signal, a broadcast signal, a broadcast channel (PBCH), and other system information downlink broadcast channels.

In addition, the reference signal involved in this application includes but is not limited to the SSB, a channel state information reference signal (Channel State Information Reference Signal, CSI-RS), a tracking reference signal (Tracking reference signal, TRS), a message A (MsgA), a MsgA physical uplink shared channel (Physical Uplink Shared Channel, PUSCH), a physical random access channel (Physical Random Access Channel, PRACH), and a cell group (Cell Group, CG) PUSCH. The reference signal may be a reference signal of one cell or reference signals of a plurality of cells, where the cells may be on the same or different frequency carriers (frequency carrier), and may be within the same or different bands (band).

The following describes in detail the SSB configuration method provided in the embodiments of this application through some embodiments and application scenarios thereof with reference to the accompanying drawings.

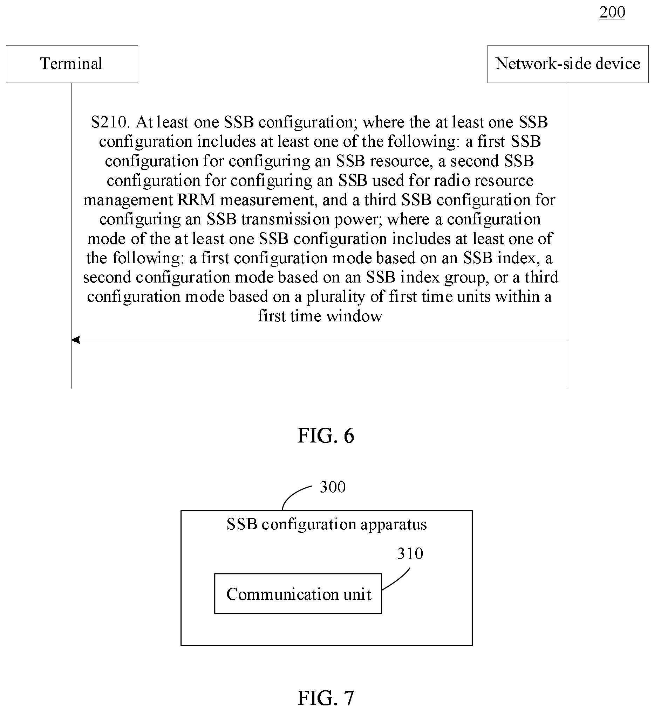

FIG. 6 is a schematic flowchart of an SSB configuration method 200 according to an embodiment of this application.

As shown in FIG. 6, the SSB configuration method 200 may include at least part of the following content.

S210. A terminal receives at least one SSB configuration from a network-side device; where
the at least one SSB configuration includes at least one of the following:
a first SSB configuration for configuring an SSB resource, a second SSB configuration for configuring an SSB used for radio resource management RRM measurement, and a third SSB configuration for configuring an SSB transmission power; where
a configuration mode of the at least one SSB configuration includes at least one of the following:
   a first configuration mode based on an SSB index, a second configuration mode based on an SSB index group, or a third configuration mode based on a plurality of first time units within a first time window.

In this embodiment, the SSB resource, the SSB used for RRM measurement, or the SSB transmission power can be flexibly configured with the granularity of the SSB index, the SSB index group, or the first time unit within the first time window, preventing the network from configuring the same periodicity and transmission power for different SSB indices, that is, improving the flexibility of SSB configuration.

Specifically, considering that the load (load) of the system may differ for different SSB indices or SSB index groups, in this embodiment, the SSB resource or the SSB used for RRM measurement can be flexibly configured with the granularity of the SSB index, the SSB index group, or the first time unit within the first time window. In addition, considering that the reception performance of the SSB may be different at different SSB positions, time-domain diversity is required to improve the SSB performance. Furthermore, improving the position flexibility of SSBs helps the network schedule other signals, especially in scenarios where scheduling signals are periodic signals and where downlink slots are configured with uplink subbands in enhanced duplex mode.

Similarly, the desired coverage and the corresponding required transmission power may also differ for different SSB indices or SSB index groups. In this embodiment, the SSB transmission power can be flexibly configured with the granularity of the SSB index, the SSB index group, or the first time unit within the first time window, achieving a more flexible SSB transmission power configuration.

In some embodiments, in a case that a configuration mode of the first SSB or a configuration mode of the second SSB configuration is the first configuration mode, the first configuration mode satisfies at least one of the following:
one SSB index corresponds to one or more SSBs;
SSBs corresponding to a same SSB index have a same type or attribute;
each SSB index is configured with an independent periodicity;
periodicities of different SSB indices are in a multiple relationship or a periodicity of each SSB index is a multiple of a minimum time unit;
SSBs corresponding to a same SSB index have fixed resource positions within a period;
resource positions of SSBs corresponding to a same SSB index within a period are determined based on first information, the first information being configured by a network or specified by a protocol;
different SSB indices have a same periodicity, and some SSB indices are deactivated within part of periods within a second time window; and
different SSB indices are configured with a same first periodicity, and some SSB indices are configured with a second periodicity or correspond to a plurality of resource positions within the first periodicity.

For example, one SSB index corresponds to one or more SSBs within a period.

For example, SSBs corresponding to the same SSB index have the same type or attribute, including but not limited to: the SSBs corresponding to the same SSB index have the same coverage requirements and the same waveform.

For example, different SSB indices may have the same or different periodicities.

For example, the minimum time unit may be a time unit configured by a network or specified by a protocol. In other words, the length of the minimum time unit may be configured by a network or specified by a protocol.

For example, the minimum time unit is shorter than the periodicity of any SSB index.

For example, SSBs corresponding to the same SSB index have fixed resource positions within any period thereof.

For example, resource positions of SSBs corresponding to the same SSB index within any period thereof are determined based on the first information.

For example, different SSB indices have the same periodicity, and some SSB indices are deactivated within part of periods within the second time window, which can also be understood or replaced as: different SSB indices have the same periodicity, and some SSB indices are not transmitted or not received within part of periods within the second time window.

For example, the second periodicity is located in the first periodicity, and the first periodicity is a multiple of the second periodicity.

In some embodiments, the first information is used to indicate a position of a time segment within a period for the SSBs corresponding to the same SSB index.

For example, the first information is used to indicate the position of the time segment within any period thereof for the SSBs corresponding to the same SSB index.

For example, assuming the period of SSB0 is 20 ms, the first information is used to indicate the 5 ms within the 20 ms period for the SSBs corresponding to SSB0. For example, the first information is 2 bits, and its values 0, 1, 2, and 3 represent the first, second, third, and fourth 5 ms respectively.

In some embodiments, in a case that a configuration mode of the first SSB or a configuration mode of the second SSB configuration is the second configuration mode, the second configuration mode satisfies at least one of the following:
one SSB index in a same SSB index group corresponds to one or more SSBs;
SSBs corresponding to a same SSB index group have a same type or attribute;
the terminal is configured with one or more SSB index groups;
SSB indices in different SSB index groups have a same number;
each SSB index group is configured with an independent number of SSB indices;
SSBs corresponding to different SSB index groups have a same number;
SSBs corresponding to each SSB index group are configured with an independent number;
SSB indices in each SSB index group are consecutive or determined based on second information, the second information being configured by a network or specified by a protocol;
each SSB index group is configured with an independent periodicity;
periodicities of different SSB index groups are in a multiple relationship or a periodicity of each SSB index value is a multiple of a minimum time unit;
SSBs corresponding to a same SSB index group have fixed resource positions within a period;
resource positions of SSBs corresponding to a same SSB index group within a period are determined based on third information, the third information being configured by a network or specified by a protocol;
different SSB index groups have a same periodicity, and some SSB index groups are deactivated within part of periods within a third time window; and
different SSB index groups are configured with a same third periodicity, and some SSB indices are configured with a fourth periodicity or correspond to a plurality of resource positions within the third periodicity.

For example, one SSB index in the same SSB index group corresponds to one or more SSBs within a period.

For example, SSBs corresponding to the same SSB index group have a same type or attribute, including but not limited to: the SSBs corresponding to the same SSB index group have the same coverage requirements and the same waveform.

For example, different SSB index groups may have the same or different periodicities.

For example, SSB indices in different SSB index groups may have the same or different numbers.

For example, SSBs corresponding to different SSB index groups may have the same or different numbers.

For example, the second information is used to indicate whether the SSB indices in each SSB index group are consecutive, and if not consecutive, the second information is used to indicate the included SSB indices.

For example, the minimum time unit may be a time unit configured by a network or specified by a protocol. In other words, the length of the minimum time unit may be configured by a network or specified by a protocol.

For example, the minimum time unit is shorter than the periodicity of any SSB index.

For example, SSBs corresponding to the same SSB index group have fixed resource positions within any period thereof.

For example, resource positions of SSBs corresponding to the same SSB index group within any period thereof are determined based on the third information.

For example, different SSB index groups have the same periodicity, and some SSB index groups are deactivated within part of periods within the third time window, which can also be understood or replaced as: different SSB index groups have the same periodicity, and some SSB index groups are not transmitted or not received within part of periods within the third time window.

For example, the fourth periodicity is located in the third periodicity, and the third periodicity is a multiple of the fourth periodicity.

In some embodiments, the third information is used to indicate a position of a time segment within a period for the SSBs corresponding to the same SSB index group.

For example, the third information is used to indicate the position of the time segment within the period for the SSBs corresponding to the same SSB index group.

For example, assuming the period of {SSB0, SSB1, SSB2, SSB3} is 20 ms, the third information is used to indicate the 5 ms within the 20 ms period for the SSBs corresponding to {SSB0, SSB1, SSB2, SSB3}. For example, the third information is 2 bits, and its values 0, 1, 2, and 3 represent the first, second, third, and fourth 5 ms respectively.

In some embodiments, in a case that a configuration mode of the first SSB or a configuration mode of the second SSB configuration is the third configuration mode, the third configuration mode satisfies at least one of the following:
a starting position of the first time unit is configured by a network or specified by a protocol;
a duration of the first time unit is configured by a network or specified by a protocol;
a length of the first time window is equal to a length of an SSB configuration period;
different first time units among the plurality of first time units correspond to different SSB configuration modes; and
an SSB configuration mode corresponding to the first time unit is the first configuration mode or the second configuration mode.

For example, the starting position of the first time unit is system frame number (System Frame Number, SFN) 0 or hyper frame number (Hyper Frame Number, HFN) 0.

For example, the starting position of the first time unit is determined based on a time offset (time offset) from SFN 0 or HFN 0.

In some embodiments, the first time unit is related to at least one of the following:
a mapping cycle from an SSB to another reference signal;
an association period from an SSB to another reference signal;
an association pattern period from an SSB to another reference signal;
a radio resource management RRM measurement configuration periodicity;
a configuration periodicity of another reference signal; and
a second time unit configured by a network or specified by a protocol.

For example, the another reference signal includes any reference signal other than the SSB.

For example, the another reference signal includes but is not limited to CSI-RS, TRS, MsgA, MsgA PUSCH, PRACH, and CG PUSCH.

For example, the RRM measurement configuration periodicity may include a periodicity defined by SSB based measurement timing configuration (SSB based measurement timing configuration, SMTC).

For example, the configuration periodicity of another reference signal includes but is not limited to a configuration periodicity of a PRACH associated with an SSB and a CG PUSCH periodicity associated with a CG PUSCH.

It should be understood that the first time unit is related to one or more of the periodicities and the second time unit, which can be understood as: the first time unit has a mapping relationship with one or more of the periodicities and the second time unit, or the first time unit can be determined based on one or more of the periodicities and the second time unit, or the first time unit is equal to one or more of the periodicities and the second time unit.

In some embodiments, a configuration mode of the first SSB configuration is the same as a configuration mode of the second SSB configuration.

For example, the configuration mode of the first SSB configuration and the configuration mode of the second SSB configuration are both the first configuration mode, the second configuration mode, or the third configuration mode.

In the embodiments, the configuration mode of the first SSB configuration being the sane as the configuration mode of the second SSB configuration can reduce the complexity of SSB configuration, especially the configuration complexity of the second SSB configuration.

Certainly, in other alternative embodiments, the configuration mode of the first SSB configuration may be different from the configuration mode of the second SSB configuration, which is not specifically limited in this application.

In some embodiments, in a case that a configuration mode of the third SSB configuration is the first configuration mode, the first configuration mode satisfies at least one of the following:
each SSB index is configured with an independent transmission power;
a transmission power of a first reference signal corresponding to each SSB index is a common transmission power;
each SSB index is configured with an independent power offset;
a power offset of a first reference signal corresponding to each SSB index is a common power offset; and
a power offset of each SSB index or the power offset of the first reference signal is an offset relative to a first reference power, where the first reference power is a transmission power of a second reference signal corresponding to a reference SSB index, or the first reference power is configured by a network or specified by a protocol.

For example, the transmission power of the first reference signal corresponding to each SSB index is a common transmission power, which can be understood as: the transmission power of the first reference signal corresponding to each SSB index is the transmission power of any reference signal corresponding to that SSB index, or the transmission power of the first reference signal included in the SSB corresponding to each SSB index is the transmission power of any reference signal included in the SSB corresponding to that SSB index.

For example, the power offset of the first reference signal corresponding to each SSB index is a common power offset, which can be understood as: the power offset of the first reference signal corresponding to each SSB index is the power offset of any reference signal corresponding to that SSB index, or the power offset of the first reference signal included in the SSB corresponding to each SSB index is the power offset of any reference signal included in the SSB corresponding to that SSB index.

For example, the first reference signal may be any reference signal in the SSB. For example, the first reference signal includes but is not limited to a synchronization signal, a broadcast signal, a broadcast channel (PBCH), and other system information downlink broadcast channels.

For example, the reference SSB index may be configured by a network or specified by a protocol.

For example, the second reference signal may be configured by a network or specified by a protocol.

For example, the second reference signal may be any reference signal in the SSB. For example, the second reference signal includes but is not limited to a synchronization signal, a broadcast signal, a broadcast channel (PBCH), and other system information downlink broadcast channels.

In some embodiments, in a case that a configuration mode of the third SSB configuration is the second configuration mode, the second configuration mode satisfies at least one of the following:
each SSB index group is configured with an independent transmission power;
a transmission power of a first reference signal corresponding to each SSB index group is a common transmission power;
each SSB index group is configured with an independent power offset;
a power offset of a first reference signal corresponding to each SSB index group is a common power offset; and
a power offset of each SSB index group or the power offset of the first reference signal is an offset relative to a first reference power, where the first reference power is a transmission power of a second reference signal corresponding to a reference SSB index group, or the first reference power is configured by a network or specified by a protocol.

For example, the transmission power of the first reference signal corresponding to each SSB index group is a common transmission power, which can be understood as: the transmission power of the first reference signal corresponding to each SSB index group is the transmission power of any reference signal corresponding to that SSB index group, or the transmission power of the first reference signal included in the SSB corresponding to each SSB index group is the transmission power of any reference signal included in the SSB corresponding to that SSB index group.

For example, the power offset of the first reference signal corresponding to each SSB index group is a common power offset, which can be understood as: the power offset of the first reference signal corresponding to each SSB index group is the power offset of any reference signal corresponding to that SSB index group, or the power offset of the first reference signal included in the SSB corresponding to each SSB index group is the power offset of any reference signal included in the SSB corresponding to that SSB index group.

For example, the first reference signal may be any reference signal in the SSB. For example, the first reference signal includes but is not limited to a synchronization signal, a broadcast signal, a broadcast channel (PBCH), and other system information downlink broadcast channels.

For example, the reference SSB index group may be configured by a network or specified by a protocol.

For example, the second reference signal may be configured by a network or specified by a protocol.

For example, the second reference signal may be any reference signal in the SSB. For example, the second reference signal includes but is not limited to a synchronization signal, a broadcast signal, a broadcast channel (PBCH), and other system information downlink broadcast channels.

In some embodiments, in a case that a configuration mode of the third SSB configuration is the third configuration mode, the third configuration mode satisfies at least one of the following:
each first time unit is configured with an independent SSB transmission power;
a transmission power of a first reference signal on each first time unit is a common transmission power;
each first time unit is configured with an independent power offset of an SSB transmission power;
a power offset of a first reference signal on each first time unit is a common power offset; and
a power offset on each first time unit or the power offset of the first reference signal is an offset relative to a first reference power, where the first reference power is a transmission power of a second reference signal on a reference first time unit, or the first reference power is configured by a network or specified by a protocol.

For example, the transmission power of the first reference signal on each first time unit is a common transmission power, which can be understood as: the transmission power of the first reference signal on each first time unit is the transmission power of any reference signal on that first time unit, or the transmission power of the first reference signal on each first time unit is the transmission power of any reference signal included in the SSB on that first time unit.

For example, the power offset of the first reference signal on each first time unit is a common power offset, which can be understood as: the power offset of the first reference signal on each first time unit is the power offset of any reference signal on that first time unit, or the power offset of the first reference signal on each first time unit is the power offset of any reference signal included in the SSB on that first time unit.

For example, the first reference signal may be any reference signal in the SSB. For example, the first reference signal includes but is not limited to a synchronization signal, a broadcast signal, a broadcast channel (PBCH), and other system information downlink broadcast channels.

For example, the reference first time unit may be configured by a network or specified by a protocol.

For example, the second reference signal may be a reference signal included in a reference SSB on the reference first time unit. The reference SSB index group may be configured by a network or specified by a protocol.

For example, the second reference signal may be configured by a network or specified by a protocol.

For example, the second reference signal may be any reference signal in the SSB. For example, the second reference signal includes but is not limited to a synchronization signal, a broadcast signal, a broadcast channel (PBCH), and other system information downlink broadcast channels.

In some embodiments, the first reference signal or the second reference signal includes at least one of the following:
a broadcast signal;
a synchronization signal;
a primary synchronization or secondary synchronization signal; and
another downlink broadcast signal or common reference signal.

In some embodiments, the at least one SSB configuration satisfies at least one of the following:
a plurality of intra-band serving cells use a same configuration mode;
a plurality of intra-frequency serving cells use a same configuration mode;
a plurality of inter-band serving cells use independent configuration modes;
a plurality of inter-frequency serving cells use independent configuration modes;
different bands within a same serving cell use a same configuration mode; and
non-contiguous bands within a same serving cell use different configuration modes.

Intra-frequency/band (intra-frequency/band) cells are typically configured in different sectors, and the same configuration mode can be used in this case to reduce the complexity of SSB search. Similarly, this applies to SSBs on different bands within the same cell. Inter-frequency/band (inter-frequency/band) cells may typically be configured in the same sector, and different SSB configuration modes can be used to reduce interference between SSBs.

In some embodiments, the at least one SSB configuration is carried by network configuration signaling; where the network configuration signaling includes at least one of the following:
system information;
RRC signaling;
media access control (Media Access Control, MAC) control element (Control Element, CE) signaling; and
downlink control information (Downlink Control Information, DCI) signaling.

Certainly, the network configuration signaling may alternatively be any semi-static (Semi-static) information or dynamic signaling, which is not specifically limited in this application.

In some embodiments, at least one of the following corresponding to the network configuration signaling is the same as or different from at least one of the following corresponding to a configured SSB: carrier, cell, band (band), and bandwidth part (Bandwidth Part, BWP).

In the embodiments, at least one of the following corresponding to the network configuration signaling is the same as or different from at least one of the following corresponding to the configured SSB: carrier, cell, band, and BWP, meaning that the network configuration signaling and the configured SSB may be on the same or different carriers, cells, bands, or BWPs. Specifically, when the network configuration signaling and the configured SSB are on the same carrier, cell, band, or BWP, the signaling overheads of the at least one SSB configuration can be reduced; and when the network configuration signaling and the configured SSB are on different carriers, cells, bands, or BWPs, the flexibility of the at least one SSB configuration can be improved.

The following describes the SSB configuration method provided in this application with reference to specific embodiments.

### Embodiment 1:

The load of the system may differ for different SSB indices or SSB index groups, and the SSB resources need to be flexibly configured.

In some embodiments, the configuration of SSB time-frequency resources is determined in one or more of the following manners.

Determination of SSB resources for each SSB index is supported. That is, independent determination of SSB time-frequency resources is introduced for different SSB indices.

Optionally, one or more SSBs may correspond to one SSB index.

Optionally, these SSBs correspond to the same type/attribute (such as coverage requirements and waveform).

Configuration of SSB resources for each SSB index group is supported. That is, independent determination of SSB time-frequency resources is introduced for different SSB index groups.

Optionally, SSBs belonging to the same group correspond to the same type/attribute (such as coverage requirements and waveform).

Configuration of SSB resources based on first time units within a first time window is supported. That is, independent or different SSB time-frequency resources are configured on different first time units within the first time window.

In a first sub-embodiment, the determination of SSB resources for each SSB index further includes one or more of the following methods.
1. Each SSB index has an independent SSB periodicity configuration.
2. SSB periodicities of different SSB indices are in a multiple relationship or are multiples of a minimum time unit (for example, 5 ms).
3. The same SSB index has a fixed position within the corresponding SSB period.
   For example, four SSBs are configured, namely SSB0, SSB1, SSB2, and SSB3, with the SSB0 period of 20 ms, the SSB1 period of 40 ms, the SSB2 period of 80 ms, and the SSB3 period of 160 ms. To reduce the complexity of SSB search, SSB0 has a fixed position within each 20 ms period, SSB1 has a fixed position within each 40 ms period, SSB2 has a fixed position within each 80 ms period, and SSB3 has a fixed position within each 160 ms period.
4. The position of the same SSB index within the corresponding SSB period is determined according to a certain pattern, where the pattern is configured by a network or specified by a protocol.

Considering that the reception performance of the SSB may be different at different SSB positions, time-domain diversity is required to improve the SSB performance. Furthermore, improving the position flexibility of SSBs helps the network schedule other signals, especially in scenarios where scheduling signals are periodic signals and where downlink slots are configured with uplink subbands in enhanced duplex mode.

For example, four SSBs are configured, namely SSB0, SSB1, SSB2, and SSB3, with the SSB0 period of 20 ms, the SSB1 period of 40 ms, the SSB2 period of 80 ms, and the SSB3 period of 160 ms.

The 5 ms within each 20 ms period for SSB0 is determined by 2 bits. The values 0, 1, 2, and 3 of the 2 bits represent transmission of the SSB within the first, second, third, and fourth 5 ms respectively.

The 10 ms within each 40 ms period for SSB1 is determined by 2 bits. The values 0, 1, 2, and 3 of the 2 bits represent transmission of the SSB within the first, second, third, and fourth 10 ms respectively.

The 20 ms within each 80 ms for SSB2 is determined by 2 bits. The values 0, 1, 2, and 3 of the 2 bits represent transmission of the SSB within the first, second, third, and fourth 20 ms respectively.

The 40 ms within each 160 ms for SSB3 is determined by 2 bits. The values 0, 1, 2, and 3 of the 2 bits represent transmission of the SSB within the first, second, third, and fourth 40 ms respectively.

5. All SSB indices are configured with the same SSB periodicity, and some SSB indices are not transmitted within certain SSB periods.

To reduce the configuration complexity of the SSB periodicity, whether to transmit SSBs of certain SSB indices within certain periods can be additionally configured. Such periods may be certain periods among a plurality of SSB periods within a time window.

For example, the SSB period is configured as 20 ms, and this time window includes four SSB periods (that is., 80 ms). If the number of actually transmitted SSBs is configured as 4, namely SSB indices 0, 1, 2, and 3, examples of additionally configuring whether to transmit SSBs of certain SSB indices within certain periods are as follows:
SSB0 is transmitted in every 20 ms within every 80 ms;
SSB1 is transmitted in the first, second, and third 20 ms of every 80 ms, and not transmitted in the fourth 20 ms;
SSB2 is transmitted in the first and second 20 ms of every 80 ms, and not transmitted in the third and fourth 20 ms; and
SSB3 is transmitted in the first 20 ms of every 80 ms, and not transmitted in the second, third, and fourth 20 ms.

For example, the foregoing configuration can be implemented by introducing a 4-bit bitmap (bit map) to determine within which 20 ms of the four 20 ms the corresponding SSB index is transmitted. The bitmap values configured for SSB0, SSB1, SSB2, and SSB3 are {1111, 1110, 1100, 1000}, where the bit value 0 indicates no transmission and 1 indicates transmission.

6. All SSB indices are configured with the same SSB periodicity, but certain SSB indices can be configured with additional (additional) periodicities or additional positions. The additional periodicities can be understood as configuring a plurality of sub-periodicities within the SSB periodicity. The additional positions can be understood as additionally configuring time-frequency domain positions of certain SSB indices within the SSB periodicity.

In a second sub-embodiment, the determination of SSB resources for each SSB index group further includes one or more of the following methods.
1. The network configures one or more SSB groups.
2. Each SSB group has the same number of SSBs.
3. Each SSB group has an independent number of SSBs.
4. SSB indices of each SSB group are consecutive or determined according to a certain pattern.
5. Each SSB index group has an independent SSB periodicity configuration.
6. SSB periodicities of different SSB index groups are in a multiple relationship or are multiples of a minimum time unit (for example, 5 ms).
7. The same SSB index group has a fixed position within the corresponding SSB periodicity.
   For example, four groups of SSBs are configured, namely {SSB0, SSB1, SSB2, SSB3}, {SSB4, SSB5, SSB6, SSB7}, {SSB8, SSB9, SSB10, SSB11}, and {SSB12, SSB13, SSB14, SSB15}. The period of {SSB0, SSB1, SSB2, SSB3} is 20 ms, the period of {SSB4, SSB5, SSB6, SSB7} is 40 ms, the period of {SSB8, SSB9, SSB10, SSB11} is 80 ms, and the period of {SSB12, SSB13, SSB14, SSB15} is 160 ms. To reduce the complexity of SSB search, {SSB0, SSB1, SSB2, SSB3} has a fixed position within each 20 ms period, {SSB4, SSB5, SSB6, SSB7} has a fixed position within each 40 ms period, {SSB8, SSB9, SSB10, SSB11} has a fixed position within each 80 ms period, and {SSB12, SSB13, SSB14, SSB15} has a fixed position within each 160 ms period.
8. The position of the same SSB index group within the corresponding SSB group period is determined according to a certain pattern, where the pattern is configured by a network or specified by a protocol.

Considering that the reception performance of the SSB may be different at different SSB positions in the SSB group, time-domain diversity is required to improve the SSB performance. Furthermore, improving the position flexibility of SSBs in the SSB group can helps the network schedule other signals, especially in scenarios where scheduling signals are periodic signals and where downlink slots are configured with uplink subbands in enhanced duplex mode.

For example, four SSB groups are configured, namely {SSB0, SSB1, SSB2, SSB3}, {SSB4, SSB5, SSB6, SSB7}, {SSB8, SSB9, SSB10, SSB11}, and {SSB12, SSB13, SSB14, SSB15}. The period of {SSB0, SSB1, SSB2, SSB3} is 20 ms, the period of {SSB4, SSB5, SSB6, SSB7} is 40 ms, the period of {SSB8, SSB9, SSB10, SSB11} is 80 ms, and the period of {SSB12, SSB13, SSB14, SSB15} is 160 ms.

The 5 ms within each 20 ms period for {SSB0, SSB1, SSB2, SSB3} is determined by 2 bits. The values 0, 1, 2, and 3 of the 2 bits represent transmission of the SSB group within the first, second, third, and fourth 5 ms respectively.

The 10 ms within each 40 ms period for {SSB4, SSB5, SSB6, SSB7} is determined by 2 bits. The values 0, 1, 2, and 3 of the 2 bits represent transmission of the SSB group within the first, second, third, and fourth 10 ms respectively.

The 20 ms within each 80 ms for {SSB8, SSB9, SSB10, SSB11} is determined by 2 bits. The values 0, 1, 2, and 3 of the 2 bits represent transmission of the SSB group within the first, second, third, and fourth 20 ms respectively.

The 40 ms within each 160 ms for {SSB12, SSB13, SSB14, SSB15} is determined by 2 bits. The values 0, 1, 2, and 3 of the 2 bits represent transmission of the SSB group within the first, second, third, and fourth 40 ms respectively.

9. All SSB index groups are configured with the same SSB periodicity, and some SSB index groups are not transmitted within certain SSB periods.

To reduce the configuration complexity of the SSB periodicity, the same SSB periodicity can be configured for all SSB groups, and whether to transmit SSBs of certain SSB index groups within certain periods can be additionally configured. Such periods may be certain periods among a plurality of SSB periods within a time window.

For example, the SSB period is configured as 20 ms, and this time window includes four SSB periods (that is, 80 ms). If the number of actually transmitted SSB groups is configured as 4, with each group having four SSBs, namely SSB index groups {SSB0, SSB1, SSB2, SSB3}, {SSB4, SSB5, SSB6, SSB7}, {SSB8, SSB9, SSB10, SSB11}, and {SSB12, SSB13, SSB14, SSB15}, examples of additionally configuring whether to transmit SSBs of certain SSB index groups within certain periods are as follows:
{SSB0, SSB1, SSB2, SSB3} is transmitted in every 20 ms within every 80 ms;
{SSB4, SSB5, SSB6, SSB7} is transmitted in the first, second, and third 20 ms of every 80 ms, and not transmitted in the fourth 20 ms;
{SSB8, SSB9, SSB10, SSB11} is transmitted in the first and second 20 ms of every 80 ms, and not transmitted in the third and fourth 20 ms; and
{SSB12, SSB13, SSB14, SSB15} is transmitted in the first 20 ms of every 80 ms, and not transmitted in the second, third, and fourth 20 ms.

For example, the foregoing configuration can be implemented by introducing a 4-bit bitmap (bit map) to determine within which 20 ms of the four 20 ms the corresponding SSB index group is transmitted. The bitmap values configured for the SSB index groups {SSB0, SSB1, SSB2, SSB3}, {SSB4, SSB5, SSB6, SSB7}, {SSB8, SSB9, SSB10, SSB11}, and {SSB12, SSB13, SSB14, SSB15} are {1111, 1110, 1100, 1000}, where the bit value 0 indicates no transmission of the corresponding SSB group within the corresponding 20 ms and 1 indicates transmission of the corresponding SSB group within the corresponding 20 ms.

10. All SSB index groups are configured with the same SSB periodicity, but certain SSB index groups can be configured with additional (additional) periodicities or additional positions. The additional periodicities can be understood as configuring a plurality of sub-periodicities within the SSB periodicity. The additional positions can be understood as additionally configuring time-frequency domain positions of certain SSB index groups within the SSB periodicity.

In a third sub-embodiment, the configuration of SSB resources based on first time units within a first time window further includes one or more of the following methods.
1. The network configures or the protocol specifies the starting time of the first time unit.

For example, the starting time is SFN 0 or HFN 0.

For example, the network configures or the protocol specifies that the starting time is a time offset (time offset) from SFN 0.

2. The network configures SSB resource patterns on different first time units within the first time window.

The SSB resource pattern can be configured according to different SSB indices or different SSB index groups.

The first time window may be a periodic window. For example, N first time units may constitute one period, where N is configured by the network or specified by the protocol.

For example, the protocol specifies that the first time unit is 640 ms and N = 2, that is, the first time window is 1280 ms. The network configures one SSB resource configuration mode for every even 640 ms and another SSB resource configuration mode for every odd 640 ms.

3. The first time unit is related to one or more of the following periods:
a mapping cycle from an SSB to another reference signal;
an association period from an SSB to another reference signal;
an association pattern period from an SSB to another reference signal;
an RRM measurement configuration periodicity; for example, a periodicity defined by SMTC.
a configuration periodicity of another reference signal; for example, a configuration periodicity of a PRACH associated with an SSB, and for another example, a CG PUSCH periodicity associated with a CG PUSCH; and
a specific time unit configured by the network or specified by the protocol; for example, 160 ms or N* 160 ms, where N is a positive integer.

It is worth noting that intra-frequency/band (intra-frequency/band) cells are typically configured in different sectors, and the same SSB resource configuration mode can be used in this case to reduce the complexity of SSB search. Similarly, this applies to SSBs on different bands within the same cell. Inter-frequency/band (inter-frequency/band) cells may typically be configured in the same sector, and different SSB resource configuration modes can be configured to reduce interference between SSBs.

In other words, in some embodiments, one or more of the following SSB resource configuration modes are supported:
the same SSB resource configuration mode is configured for a plurality of intra-band (intra-band) serving cells;
the same SSB resource configuration mode is configured for a plurality of intra-frequency (intra-frequency) serving cells;
independent SSB resource configuration modes are configured for a plurality of inter-band (inter-band) serving cells;
independent SSB resource configuration modes are configured for a plurality of inter-frequency (inter-frequency) serving cells;
different bands (frequency band) within the same serving cell use the same SSB resource configuration mode; and
non-contiguous bands (band) within the same serving cell use different SSB resource configuration modes.

In some embodiments, the configuration of the SSB used for RRM measurement (similar to SMTC configuration in 5G) includes one or more of the following methods.
1. Determination of SSB resources used for RRM measurement for each SSB index is supported. That is, independent determination of SSB time-frequency resources used for RRM measurement is introduced for different SSB indices.
2. Configuration of SSB resources used for RRM measurement for each SSB index group is supported. That is, independent determination of SSB time-frequency resources used for RRM measurement is introduced for different SSB index groups.
3. Configuration of SSB resources used for RRM measurement based on first time units is supported. That is, independent or different SSB time-frequency resources used for RRM measurement are configured on different first time units.
4. The configuration of the SSB used for RRM measurement uses the same method as the SSB resource configuration (described in the foregoing embodiments).

In some embodiments, the network configures SSB resources in one or more of the following manners:
system information;
semi-static RRC signaling;
MAC-CE signaling; and
DCI signaling.

It is worth noting that the network configuration signaling and the configured SSB may be on the same or different carriers, cells, bands (band), or bandwidth parts.

### Embodiment 2:

The coverage requirements of the system may differ for different SSB indices or SSB index groups, and the required SSB transmission power needs to be flexibly configured.

In some embodiments, the configuration of the SSB power is determined in one or more of the following manners.
1. Determination of SSB powers for each SSB index is supported. That is, independent determination of SSB powers is introduced for different SSB indices.
2. Determination of SSB powers for each SSB index group is supported. That is, independent determination of SSB powers is introduced for different SSB index groups.
3. Configuration of SSB powers based on first time units within a first time window is supported. That is, independent or different SSB powers are configured on different first time units within the first time window.

In a first sub-embodiment, the SSB power configuration can be the power configuration of one or more of the following signals:
a broadcast signal;
a synchronization signal;
a primary synchronization or secondary synchronization signal;
another downlink broadcast signal or common reference signal; and
a common power configuration associated with the power of one of the foregoing signals.

In some embodiments, the SSB power configuration may be one or more of the following power offset configurations.
1. Determination of SSB power offsets for each SSB index is supported. That is, independent determination of SSB power offsets is introduced for different SSB indices.
2. Configuration of SSB power offsets for each SSB index group is supported. That is, independent determination of SSB power offsets is introduced for different SSB index groups.
3. Configuration of SSB power offsets based on first time units within a first time window is supported. That is, independent or different SSB power offsets are configured on different first time units within the first time window.
4. The power offset is an offset relative to the power of one or more signals included in a specific SSB index or SSB index group.
5. The power offset is an offset relative to a reference power configured by a network or specified by a protocol.

In some embodiments, the configuration of the SSB power offset may be the power offset configuration of one or more of the following signals:
a broadcast signal;
a synchronization signal;
a primary synchronization or secondary synchronization signal;
another downlink broadcast signal or common reference signal; and
a common power offset configuration associated with the power of one of the foregoing signals.

The SSB configuration method provided in the embodiments of this application can be performed by an SSB configuration apparatus. In the embodiments of this application, the SSB configuration apparatus performing the SSB configuration method is used as an example to describe the SSB configuration apparatus provided in the embodiments of this application.

FIG. 7 is a schematic block diagram of an SSB configuration apparatus 300 according to an embodiment of this application.

As shown in FIG. 7, the SSB configuration apparatus 300 includes:
a communication unit 310 configured to receive at least one SSB configuration from a network-side device, where
the at least one SSB configuration includes at least one of the following:
   a first SSB configuration for configuring an SSB resource, a second SSB configuration for configuring an SSB used for radio resource management RRM measurement, and a third SSB configuration for configuring an SSB transmission power; where
   a configuration mode of the at least one SSB configuration includes at least one of the following:
      a first configuration mode based on an SSB index, a second configuration mode based on an SSB index group, or a third configuration mode based on a plurality of first time units within a first time window.

In some embodiments, in a case that a configuration mode of the first SSB or a configuration mode of the second SSB configuration is the first configuration mode, the first configuration mode satisfies at least one of the following:
one SSB index corresponds to one or more SSBs;
SSBs corresponding to a same SSB index have a same type or attribute;
each SSB index is configured with an independent periodicity;
periodicities of different SSB indices are in a multiple relationship or a periodicity of each SSB index is a multiple of a minimum time unit;
SSBs corresponding to a same SSB index have fixed resource positions within a period;
resource positions of SSBs corresponding to a same SSB index within a period are determined based on first information, the first information being configured by a network or specified by a protocol;
different SSB indices have a same periodicity, and some SSB indices are deactivated within part of periods within a second time window; and
different SSB indices are configured with a same first periodicity, and some SSB indices are configured with a second periodicity or correspond to a plurality of resource positions within the first periodicity.

In some embodiments, the first information is used to indicate a position of a time segment within a period for the SSBs corresponding to the same SSB index.

In some embodiments, in a case that a configuration mode of the first SSB or a configuration mode of the second SSB configuration is the second configuration mode, the second configuration mode satisfies at least one of the following:
one SSB index in a same SSB index group corresponds to one or more SSBs;
SSBs corresponding to a same SSB index group have a same type or attribute;
a terminal is configured with one or more SSB index groups;
SSB indices in different SSB index groups have a same number;
each SSB index group is configured with an independent number of SSB indices;
SSBs corresponding to different SSB index groups have a same number;
SSBs corresponding to each SSB index group are configured with an independent number;
SSB indices in each SSB index group are consecutive or determined based on second information, the second information being configured by a network or specified by a protocol;
each SSB index group is configured with an independent periodicity;
periodicities of different SSB index groups are in a multiple relationship or a periodicity of each SSB index value is a multiple of a minimum time unit;
SSBs corresponding to a same SSB index group have fixed resource positions within a period;
resource positions of SSBs corresponding to a same SSB index group within a period are determined based on third information, the third information being configured by a network or specified by a protocol;
different SSB index groups have a same periodicity, and some SSB index groups are deactivated within part of periods within a third time window; and
different SSB index groups are configured with a same third periodicity, and some SSB indices are configured with a fourth periodicity or correspond to a plurality of resource positions within the third periodicity.

In some embodiments, the third information is used to indicate a position of a time segment within a period for the SSBs corresponding to the same SSB index group.

In some embodiments, in a case that a configuration mode of the first SSB or a configuration mode of the second SSB configuration is the third configuration mode, the third configuration mode satisfies at least one of the following:
a starting position of the first time unit is configured by a network or specified by a protocol;
a duration of the first time unit is configured by a network or specified by a protocol;
a length of the first time window is equal to a length of an SSB configuration period;
different first time units among the plurality of first time units correspond to different SSB configuration modes; and
an SSB configuration mode corresponding to the first time unit is the first configuration mode or the second configuration mode.

In some embodiments, the first time unit is related to at least one of the following:
a mapping cycle from an SSB to another reference signal;
an association period from an SSB to another reference signal;
an association pattern period from an SSB to another reference signal;
a radio resource management RRM measurement configuration periodicity;
a configuration periodicity of another reference signal; and
a second time unit configured by a network or specified by a protocol.

In some embodiments, a configuration mode of the first SSB configuration is the same as a configuration mode of the second SSB configuration.

In some embodiments, in a case that a configuration mode of the third SSB configuration is the first configuration mode, the first configuration mode satisfies at least one of the following:
each SSB index is configured with an independent transmission power;
a transmission power of a first reference signal corresponding to each SSB index is a common transmission power;
each SSB index is configured with an independent power offset;
a power offset of a first reference signal corresponding to each SSB index is a common power offset; and
a power offset of each SSB index or the power offset of the first reference signal is an offset relative to a first reference power, where the first reference power is a transmission power of a second reference signal corresponding to a reference SSB index, or the first reference power is configured by a network or specified by a protocol.

In some embodiments, in a case that a configuration mode of the third SSB configuration is the second configuration mode, the second configuration mode satisfies at least one of the following:
each SSB index group is configured with an independent transmission power;
a transmission power of a first reference signal corresponding to each SSB index group is a common transmission power;
each SSB index group is configured with an independent power offset;
a power offset of a first reference signal corresponding to each SSB index group is a common power offset; and
a power offset of each SSB index group or the power offset of the first reference signal is an offset relative to a first reference power, where the first reference power is a transmission power of a second reference signal corresponding to a reference SSB index group, or the first reference power is configured by a network or specified by a protocol.

In some embodiments, in a case that a configuration mode of the third SSB configuration is the third configuration mode, the third configuration mode satisfies at least one of the following:
each first time unit is configured with an independent SSB transmission power;
a transmission power of a first reference signal on each first time unit is a common transmission power;
each first time unit is configured with an independent power offset of an SSB transmission power;
a power offset of a first reference signal on each first time unit is a common power offset; and
a power offset on each first time unit or the power offset of the first reference signal is an offset relative to a first reference power, where the first reference power is a transmission power of a second reference signal on a reference first time unit, or the first reference power is configured by a network or specified by a protocol.

In some embodiments, the first reference signal or the second reference signal includes at least one of the following:
a broadcast signal;
a synchronization signal;
a primary synchronization or secondary synchronization signal; and
another downlink broadcast signal or common reference signal.

In some embodiments, the at least one SSB configuration satisfies at least one of the following:
a plurality of intra-band serving cells use a same configuration mode;
a plurality of intra-frequency serving cells use a same configuration mode;
a plurality of inter-band serving cells use independent configuration modes;
a plurality of inter-frequency serving cells use independent configuration modes;
different bands within a same serving cell use a same configuration mode; and
non-contiguous bands within a same serving cell use different configuration modes.

In some embodiments, the at least one SSB configuration is carried by network configuration signaling; where the network configuration signaling includes at least one of the following:
system information;
radio resource control RRC signaling;
media access control-control element MAC-CE signaling; and
downlink control information DCI signaling.

In some embodiments, at least one of the following corresponding to the network configuration signaling is the same as or different from at least one of the following corresponding to a configured SSB: carrier, cell, band, and bandwidth part BWP.

It should be understood that the SSB configuration apparatus 300 provided in the embodiments of this application corresponds to the terminal in the method embodiments of this application, and the foregoing (or other) operations or functions of the units in the SSB configuration apparatus 300 are for implementing the corresponding processes performed by the terminal in the method embodiment shown in FIG.6, which are not described herein again for brevity.

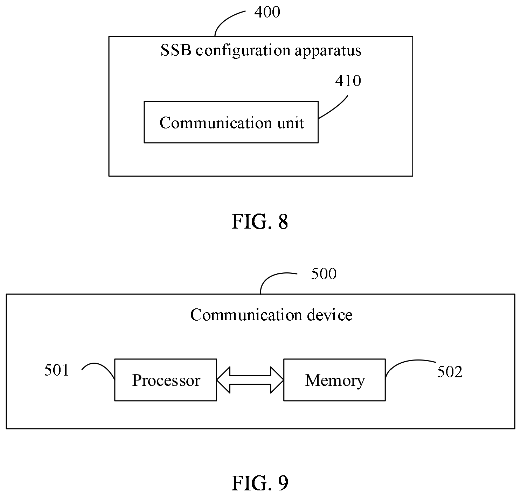

FIG. 8 is a schematic block diagram of an SSB configuration apparatus 400 according to an embodiment of this application.

As shown in FIG. 8, the SSB configuration apparatus 400 includes:
a communication unit 410 configured to send at least one SSB configuration to a terminal; where
the at least one SSB configuration includes at least one of the following:
   a first SSB configuration for configuring an SSB resource, a second SSB configuration for configuring an SSB used for radio resource management RRM measurement, and a third SSB configuration for configuring an SSB transmission power; where
   a configuration mode of the at least one SSB configuration includes at least one of the following:
      a first configuration mode based on an SSB index, a second configuration mode based on an SSB index group, or a third configuration mode based on a plurality of first time units within a first time window.

In some embodiments, in a case that a configuration mode of the first SSB or a configuration mode of the second SSB configuration is the first configuration mode, the first configuration mode satisfies at least one of the following:
one SSB index corresponds to one or more SSBs;
SSBs corresponding to a same SSB index have a same type or attribute;
each SSB index is configured with an independent periodicity;
periodicities of different SSB indices are in a multiple relationship or a periodicity of each SSB index is a multiple of a minimum time unit;
SSBs corresponding to a same SSB index have fixed resource positions within a period;
resource positions of SSBs corresponding to a same SSB index within a period are determined based on first information, the first information being configured by a network or specified by a protocol;
different SSB indices have a same periodicity, and some SSB indices are deactivated within part of periods within a second time window; and
different SSB indices are configured with a same first periodicity, and some SSB indices are configured with a second periodicity or correspond to a plurality of resource positions within the first periodicity.

In some embodiments, the first information is used to indicate a position of a time segment within a period for the SSBs corresponding to the same SSB index.

In some embodiments, in a case that a configuration mode of the first SSB or a configuration mode of the second SSB configuration is the second configuration mode, the second configuration mode satisfies at least one of the following:
one SSB index in a same SSB index group corresponds to one or more SSBs;
SSBs corresponding to a same SSB index group have a same type or attribute;
the terminal is configured with one or more SSB index groups;
SSB indices in different SSB index groups have a same number;
each SSB index group is configured with an independent number of SSB indices;
SSBs corresponding to different SSB index groups have a same number;
SSBs corresponding to each SSB index group are configured with an independent number;
SSB indices in each SSB index group are consecutive or determined based on second information, the second information being configured by a network or specified by a protocol;
each SSB index group is configured with an independent periodicity;
periodicities of different SSB index groups are in a multiple relationship or a periodicity of each SSB index value is a multiple of a minimum time unit;
SSBs corresponding to a same SSB index group have fixed resource positions within a period;
resource positions of SSBs corresponding to a same SSB index group within a period are determined based on third information, the third information being configured by a network or specified by a protocol;
different SSB index groups have a same periodicity, and some SSB index groups are deactivated within part of periods within a third time window; and
different SSB index groups are configured with a same third periodicity, and some SSB indices are configured with a fourth periodicity or correspond to a plurality of resource positions within the third periodicity.

In some embodiments, the third information is used to indicate a position of a time segment within a period for the SSBs corresponding to the same SSB index group.

In some embodiments, in a case that a configuration mode of the first SSB or a configuration mode of the second SSB configuration is the third configuration mode, the third configuration mode satisfies at least one of the following:
a starting position of the first time unit is configured by a network or specified by a protocol;
a duration of the first time unit is configured by a network or specified by a protocol;
a length of the first time window is equal to a length of an SSB configuration period;
different first time units among the plurality of first time units correspond to different SSB configuration modes; and
an SSB configuration mode corresponding to the first time unit is the first configuration mode or the second configuration mode.

In some embodiments, the first time unit is related to at least one of the following:
a mapping cycle from an SSB to another reference signal;
an association period from an SSB to another reference signal;
an association pattern period from an SSB to another reference signal;
a radio resource management RRM measurement configuration periodicity;
a configuration periodicity of another reference signal; and
a second time unit configured by a network or specified by a protocol.

In some embodiments, a configuration mode of the first SSB configuration is the same as a configuration mode of the second SSB configuration.

In some embodiments, in a case that a configuration mode of the third SSB configuration is the first configuration mode, the first configuration mode satisfies at least one of the following:
each SSB index is configured with an independent transmission power;
a transmission power of a first reference signal corresponding to each SSB index is a common transmission power;
each SSB index is configured with an independent power offset;
a power offset of a first reference signal corresponding to each SSB index is a common power offset; and
a power offset of each SSB index or the power offset of the first reference signal is an offset relative to a first reference power, where the first reference power is a transmission power of a second reference signal corresponding to a reference SSB index, or the first reference power is configured by a network or specified by a protocol.

In some embodiments, in a case that a configuration mode of the third SSB configuration is the second configuration mode, the second configuration mode satisfies at least one of the following:
each SSB index group is configured with an independent transmission power;
a transmission power of a first reference signal corresponding to each SSB index group is a common transmission power;
each SSB index group is configured with an independent power offset;
a power offset of a first reference signal corresponding to each SSB index group is a common power offset; and
a power offset of each SSB index group or the power offset of the first reference signal is an offset relative to a first reference power, where the first reference power is a transmission power of a second reference signal corresponding to a reference SSB index group, or the first reference power is configured by a network or specified by a protocol.

In some embodiments, in a case that a configuration mode of the third SSB configuration is the third configuration mode, the third configuration mode satisfies at least one of the following:
each first time unit is configured with an independent SSB transmission power;
a transmission power of a first reference signal on each first time unit is a common transmission power;
each first time unit is configured with an independent power offset of an SSB transmission power;
a power offset of a first reference signal on each first time unit is a common power offset; and
a power offset on each first time unit or the power offset of the first reference signal is an offset relative to a first reference power, where the first reference power is a transmission power of a second reference signal on a reference first time unit, or the first reference power is configured by a network or specified by a protocol.

In some embodiments, the first reference signal or the second reference signal includes at least one of the following:
a broadcast signal;
a synchronization signal;
a primary synchronization or secondary synchronization signal; and
another downlink broadcast signal or common reference signal.

In some embodiments, the at least one SSB configuration satisfies at least one of the following:
a plurality of intra-band serving cells use a same configuration mode;
a plurality of intra-frequency serving cells use a same configuration mode;
a plurality of inter-band serving cells use independent configuration modes;
a plurality of inter-frequency serving cells use independent configuration modes;
different bands within a same serving cell use a same configuration mode; and
non-contiguous bands within a same serving cell use different configuration modes.

In some embodiments, the at least one SSB configuration is carried by network configuration signaling; where the network configuration signaling includes at least one of the following:
system information;
radio resource control RRC signaling;
media access control-control element MAC-CE signaling; and
downlink control information DCI signaling.

In some embodiments, at least one of the following corresponding to the network configuration signaling is the same as or different from at least one of the following corresponding to a configured SSB: carrier, cell, band, and bandwidth part BWP.

It should be understood that the SSB configuration apparatus 400 provided in the embodiments of this application corresponds to the network-side device in the method embodiments of this application, and the foregoing (or other) operations or functions of the units in the SSB configuration apparatus 400 are for implementing the corresponding processes performed by the network-side device in the method embodiment shown in FIG. 6, which are not described herein again for brevity.

The SSB configuration apparatus in the embodiments of this application may be an electronic device, for example, an electronic device with an operating system, or may be a component in an electronic device, for example, an integrated circuit or a chip. The electronic device may be a terminal, a network-side device, or other devices. For example, the terminal may include but is not limited to the types of the terminal 11 listed above, the network-side device may include but is not limited to the types of the network-side device 12 listed above, and the other devices may be servers, network attached storage (Network Attached Storage, NAS), or the like. This is not specifically limited in the embodiments of this application.

The SSB configuration apparatus provided in the embodiments of this application can implement the processes involved in the method embodiment shown in FIG. 6, with the same technical effects achieved. To avoid repetition, details are not described herein again.

FIG. 9 is an example of a communication device 500 according to an embodiment of this application.

As shown in FIG. 9, the communication device 500 includes a processor 501 and a memory 502. The memory 502 stores a program or instructions capable of running on the processor 501. When the program or instructions are executed by the processor 501, the steps of the foregoing SSB configuration method embodiments are implemented. For example, in a case that the communication device 500 is a terminal, when the program or instructions are executed by the processor 501, the steps of the foregoing SSB configuration method embodiments performed by the terminal are implemented, with the same technical effects achieved. In a case that the communication device 500 is a network-side device, when the program or instructions are executed by the processor 501, the steps of the foregoing SSB configuration method embodiments performed by the network-side device are implemented, with the same technical effects achieved. To avoid repetition, details are not described herein again.

An embodiment of this application further provides a terminal including a processor and a communication interface. The communication interface is coupled to the processor, and the processor is configured to run a program or instructions to implement the steps of the method embodiment shown in FIG. 6. This terminal embodiment corresponds to the method embodiment of the terminal. All processes and implementations in the foregoing method embodiment are applicable to this terminal embodiment, with the same technical effects achieved.

An embodiment of this application further provides a network-side device including a processor and a communication interface. The communication interface is coupled to the processor, and the processor is configured to run a program or instructions to implement the steps of the method embodiment shown in FIG. 6. This network-side device embodiment corresponds to the method embodiment of the network-side device. All processes and implementations in the foregoing method embodiment are applicable to this network-side device embodiment, with the same technical effects achieved.

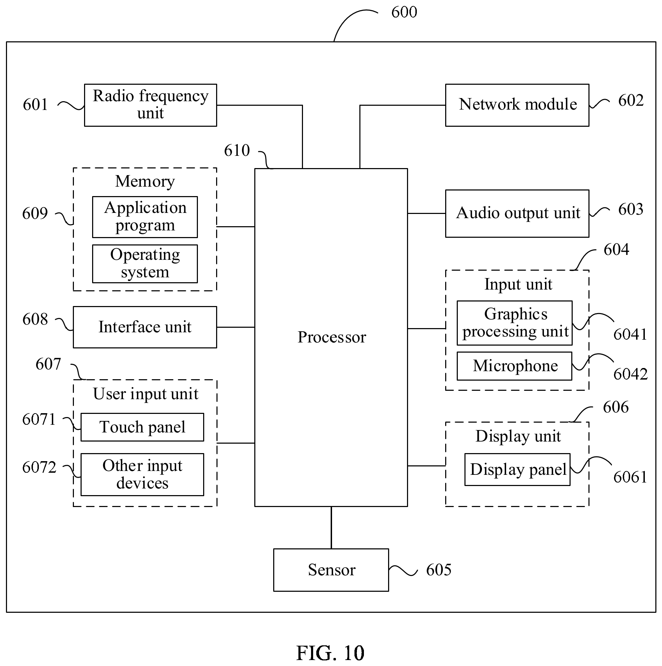

FIG. 10 is a schematic diagram of a hardware structure of a terminal for implementing the embodiments of this application.

As shown in FIG. 10, the terminal 600 includes but is not limited to at least some of these components: a radio frequency unit 601, a network module 602, an audio output unit 603, an input unit 604, a sensor 605, a display unit 606, a user input unit 607, an interface unit 608, a memory 609, and a processor 610.

Persons skilled in the art can understand that the terminal 600 may further include a power supply (for example, a battery) supplying power to the components, and the power supply may be logically connected to the processor 610 through a power management system. In this way, functions such as charge management, discharge management, and power consumption management are implemented by using the power management system. The terminal structure shown in FIG. 10 does not constitute any limitation on the terminal. The terminal may include more or fewer components than shown in the figure, or combine some of the components, or arrange the components differently. Details are not described herein.

It should be understood that in the embodiments of this application, the input unit 604 may include a graphics processing unit (Graphics Processing Unit, GPU) 6041 and a microphone 6042. The graphics processing unit 6041 processes image data of a static picture or a video that is obtained by an image capture apparatus (for example, a camera) in an image capture mode or a video capture mode. The display unit 606 may include a display panel 6061. The display panel 6061 may be configured in a form of a liquid crystal display, an organic light-emitting diode display, or the like. The user input unit 607 includes at least one of a touch panel 6071 and other input devices 6072. The touch panel 6071 is also referred to as a touchscreen. The touch panel 6071 may include two parts: a touch detection apparatus and a touch controller. The other input devices 6072 may include but are not limited to a physical keyboard, a function button (for example, a volume control button or a power on/off button), a trackball, a mouse, and a joystick. Details are not described herein.

In an embodiment of this application, the radio frequency unit 601 receives downlink data from a network-side device and sends the data to the processor 610 for processing; and the radio frequency unit 601 can additionally send uplink data to the network-side device. Generally, the radio frequency unit 601 includes but is not limited to an antenna, an amplifier, a transceiver, a coupler, a low noise amplifier, and a duplexer.

The memory 609 may be configured to store a software program or instructions and various data. The memory 609 may mainly include a first storage area for storing programs or instructions and a second storage area for storing data. The first storage area may store an operating system, an application program or instructions required by at least one function (for example, a sound playback function or an image playback function), and the like. Additionally, the memory 609 may be a volatile memory or a non-volatile memory. The non-volatile memory may be a read-only memory (Read-Only Memory, ROM), a programmable read-only memory (Programmable ROM, PROM), an erasable programmable read-only memory (Erasable PROM, EPROM), an electrically erasable programmable read-only memory (Electrically EPROM, EEPROM), or a flash memory. The volatile memory may be a random access memory (Random Access Memory, RAM), a static random access memory (Static RAM, SRAM), a dynamic random access memory (Dynamic RAM, DRAM), a synchronous dynamic random access memory (Synchronous DRAM, SDRAM), a double data rate synchronous dynamic random access memory (Double Data Rate SDRAM, DDRSDRAM), an enhanced synchronous dynamic random access memory (Enhanced SDRAM, ESDRAM), a synchronous link dynamic random access memory (Synch link DRAM, SLDRAM), and a direct rambus random access memory (Direct Rambus RAM, DRRAM). The memory 609 in the embodiments of this application includes but is not limited to these and any other applicable types of memories.

The processor 610 may include one or at least two processing units. Optionally, the processor 610 integrates an application processor and a modem processor. The application processor primarily processes operations involving an operating system, user interface, application program, and the like. The modem processor primarily processes radio communication signals, for example, being a baseband processor. It can be understood that the modem processor may alternatively be not integrated in the processor 610.

The radio frequency unit 601 is configured to receive at least one SSB configuration from a network-side device.

The at least one SSB configuration includes at least one of the following:
a first SSB configuration for configuring an SSB resource, a second SSB configuration for configuring an SSB used for radio resource management RRM measurement, and a third SSB configuration for configuring an SSB transmission power.

A configuration mode of the at least one SSB configuration includes at least one of the following:
a first configuration mode based on an SSB index, a second configuration mode based on an SSB index group, or a third configuration mode based on a plurality of first time units within a first time window.

In this embodiment, the SSB resource, the SSB used for RRM measurement, or the SSB transmission power can be flexibly configured with the granularity of the SSB index, the SSB index group, or the first time unit within the first time window, preventing the network from configuring the same periodicity and transmission power for different SSB indices, that is, improving the flexibility of SSB configuration.

It can be understood that for the processes of the implementations mentioned in this embodiment, reference may be made to the relevant descriptions in the method embodiment, with the same or corresponding technical effects achieved. To avoid repetition, details are not described herein again.

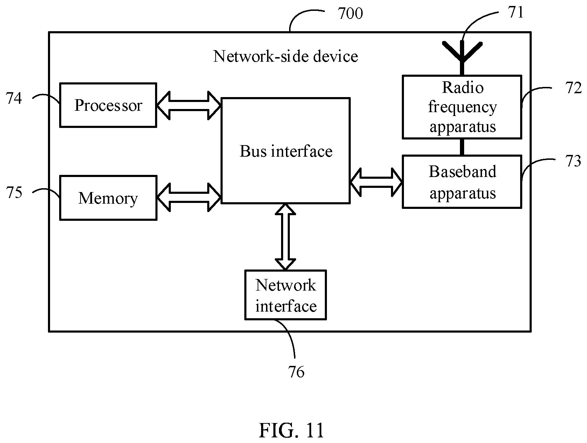

FIG. 11 is an example of a network-side device 700 according to an embodiment of this application.

As shown in FIG. 11, the network-side device 700 includes an antenna 71, a radio frequency apparatus 72, a baseband apparatus 73, a processor 74, and a memory 75. The antenna 71 is connected to the radio frequency apparatus 72. Uplink, the radio frequency apparatus 72 receives information through the antenna 71, and sends the received information to the baseband apparatus 73 for processing. Downlink, the baseband apparatus 73 processes to-be-sent information, and sends the information to the radio frequency apparatus 72; and the radio frequency apparatus 72 processes the received information and then sends the information out through the antenna 71.

The method performed by the network-side device in the foregoing embodiment may be implemented in the baseband apparatus 73, and the baseband apparatus 73 includes a baseband processor.

The baseband apparatus 73 may include, for example, at least one baseband processing unit, where at least two chips are disposed on the baseband processing unit. As shown in FIG. 9, one of the chips is, for example, a baseband processor, connected to the memory 75 through a bus interface, to invoke a program in the memory 75 to perform the processes of the network-side device in the foregoing method embodiment.

The network-side device may further include a network interface 76, where the interface is, for example, a common public radio interface (Common Public Radio Interface, CPRI).

Specifically, the network-side device 700 in this embodiment of this application further includes instructions or a program stored in the memory 75 and capable of running on the processor 74. The processor 74 invokes the instructions or program in the memory 75 to perform the steps performed by the units in the SSB configuration apparatus shown in FIG. 8, with the same technical effects achieved. To avoid repetition, details are not described herein again.

An embodiment of this application further provides a readable storage medium. The readable storage medium stores a program or instructions, and when the program or instructions are executed by a processor, the processes of the foregoing SSB configuration method embodiments are implemented, with the same technical effects achieved. To avoid repetition, details are not described herein again.

The processor is a processor in the terminal in the foregoing embodiments. The readable storage medium includes a computer-readable storage medium, for example, a computer read-only memory ROM, a random access memory RAM, a magnetic disk, or an optical disc. In some examples, the readable storage medium may be a non-transitory readable storage medium.

An embodiment of this application further provides a chip. The chip includes a processor and a communication interface. The communication interface is coupled to the processor. The processor is configured to run a program or instructions to implement the processes of the foregoing SSB configuration method embodiments, with the same technical effects achieved. To avoid repetition, details are not described herein again.

It should be understood that the chip mentioned in the embodiments of this application may also be referred to as a system-level chip, a system chip, a chip system, a system-on-chip, or the like.

An embodiment of this application further provides a computer program/program product, where the computer program/program product is stored in a storage medium, and the computer program/program product is executed by at least one processor to implement the processes of the foregoing SSB configuration method embodiments, with the same technical effects achieved. To avoid repetition, details are not described herein again.

An embodiment of this application further provides a communication system including a terminal and a network-side device. The terminal may be configured to perform the steps of the foregoing SSB configuration method performed by the terminal, and the network-side device may be configured to perform the steps of the foregoing SSB configuration method performed by the network-side device.

It should be noted that in this specification, the terms "include", "comprise", or any other variants thereof are intended to cover a non-exclusive inclusion, such that a process, method, article, or apparatus that includes a series of elements includes not only those elements but also other elements that are not expressly listed, or further includes elements inherent to such process, method, article, or apparatus. Without more restrictions, an element preceded by the statement "includes a..." does not preclude the presence of other identical elements in the process, method, article, or apparatus that includes the element. In addition, it should be noted that the scope of the method and apparatus in the embodiments of this application is not limited to functions being performed in the order shown or discussed, but may further include functions being performed at substantially the same time or in a reverse order, depending on the functions involved. For example, the described method may be performed in an order different from the order described, and steps may be added, omitted, or combined. In addition, features described with reference to some examples may be combined in other examples.

Based on the foregoing description of the embodiments, persons skilled in the art can clearly understand that the foregoing embodiments related to the method may be implemented through a computer software product on a necessary general hardware platform or certainly through hardware only. The computer software product is stored in a storage medium (for example, a ROM, a RAM, a magnetic disk, or an optical disc), and includes several instructions for instructing a terminal or a network-side device to perform the method described in the embodiments of this application.

The foregoing describes the embodiments of this application with reference to the accompanying drawings. However, this application is not limited to the foregoing specific embodiments. These specific embodiments are merely illustrative rather than restrictive. Inspired by this application, persons of ordinary skill in the art may develop many embodiments in other forms without departing from the essence of this application and the protection scope of the claims, and all such embodiments fall within the protection scope of this application.

## Claims

1. A synchronization signal/PBCH block SSB configuration method, comprising:
receiving, by a terminal, at least one SSB configuration from a network-side device;
wherein
the at least one SSB configuration comprises at least one of the following:
a first SSB configuration for configuring an SSB resource, a second SSB configuration for configuring an SSB used for radio resource management RRM measurement, and a third SSB configuration for configuring an SSB transmission power; wherein
a configuration mode of the at least one SSB configuration comprises at least one of the following:
a first configuration mode based on an SSB index, a second configuration mode based on an SSB index group, or a third configuration mode based on a plurality of first time units within a first time window.

2. The method according to claim 1, wherein in a case that a configuration mode of the first SSB or a configuration mode of the second SSB configuration is the first configuration mode, the first configuration mode satisfies at least one of the following:
one SSB index corresponds to one or more SSBs;
SSBs corresponding to a same SSB index have a same type or attribute;
each SSB index is configured with an independent periodicity;
periodicities of different SSB indices are in a multiple relationship or a periodicity of each SSB index is a multiple of a minimum time unit;
SSBs corresponding to a same SSB index have fixed resource positions within a period;
resource positions of SSBs corresponding to a same SSB index within a period are determined based on first information, the first information being configured by a network or specified by a protocol;
different SSB indices have a same periodicity, and some SSB indices are deactivated within part of periods within a second time window; and
different SSB indices are configured with a same first periodicity, and some SSB indices are configured with a second periodicity or correspond to a plurality of resource positions within the first periodicity.

3. The method according to claim 2, wherein the first information is used to indicate a position of a time segment within a period for the SSBs corresponding to the same SSB index.

4. The method according to any one of claims 1 to 3, wherein in a case that a configuration mode of the first SSB or a configuration mode of the second SSB configuration is the second configuration mode, the second configuration mode satisfies at least one of the following:
one SSB index in a same SSB index group corresponds to one or more SSBs;
SSBs corresponding to a same SSB index group have a same type or attribute;
the terminal is configured with one or more SSB index groups;
SSB indices in different SSB index groups have a same number;
each SSB index group is configured with an independent number of SSB indices;
SSBs corresponding to different SSB index groups have a same number;
SSBs corresponding to each SSB index group are configured with an independent number;
SSB indices in each SSB index group are consecutive or determined based on second information, the second information being configured by a network or specified by a protocol;
each SSB index group is configured with an independent periodicity;
periodicities of different SSB index groups are in a multiple relationship or a periodicity of each SSB index value is a multiple of a minimum time unit;
SSBs corresponding to a same SSB index group have fixed resource positions within a period;
resource positions of SSBs corresponding to a same SSB index group within a period are determined based on third information, the third information being configured by a network or specified by a protocol;
different SSB index groups have a same periodicity, and some SSB index groups are deactivated within part of periods within a third time window; and
different SSB index groups are configured with a same third periodicity, and some SSB indices are configured with a fourth periodicity or correspond to a plurality of resource positions within the third periodicity.

5. The method according to claim 4, wherein the third information is used to indicate a position of a time segment within a period for the SSBs corresponding to the same SSB index group.

6. The method according to any one of claims 1 to 5, wherein in a case that a configuration mode of the first SSB or a configuration mode of the second SSB configuration is the third configuration mode, the third configuration mode satisfies at least one of the following:
a starting position of the first time unit is configured by a network or specified by a protocol;
a duration of the first time unit is configured by a network or specified by a protocol;
a length of the first time window is equal to a length of an SSB configuration period;
different first time units among the plurality of first time units correspond to different SSB configuration modes; and
an SSB configuration mode corresponding to the first time unit is the first configuration mode or the second configuration mode.

7. The method according to claim 6, wherein the first time unit is related to at least one of the following:
a mapping cycle from an SSB to another reference signal;
an association period from an SSB to another reference signal;
an association pattern period from an SSB to another reference signal;
a radio resource management RRM measurement configuration periodicity;
a configuration periodicity of another reference signal; and
a second time unit configured by a network or specified by a protocol.

8. The method according to any one of claims 1 to 7, wherein a configuration mode of the first SSB configuration is the same as a configuration mode of the second SSB configuration.

9. The method according to any one of claims 1 to 8, wherein in a case that a configuration mode of the third SSB configuration is the first configuration mode, the first configuration mode satisfies at least one of the following:
each SSB index is configured with an independent transmission power;
a transmission power of a first reference signal corresponding to each SSB index is a common transmission power;
each SSB index is configured with an independent power offset;
a power offset of a first reference signal corresponding to each SSB index is a common power offset; and
a power offset of each SSB index or the power offset of the first reference signal is an offset relative to a first reference power, wherein the first reference power is a transmission power of a second reference signal corresponding to a reference SSB index, or the first reference power is configured by a network or specified by a protocol.

10. The method according to any one of claims 1 to 8, wherein in a case that a configuration mode of the third SSB configuration is the second configuration mode, the second configuration mode satisfies at least one of the following:
each SSB index group is configured with an independent transmission power;
a transmission power of a first reference signal corresponding to each SSB index group is a common transmission power;
each SSB index group is configured with an independent power offset;
a power offset of a first reference signal corresponding to each SSB index group is a common power offset; and
a power offset of each SSB index group or the power offset of the first reference signal is an offset relative to a first reference power, wherein the first reference power is a transmission power of a second reference signal corresponding to a reference SSB index group, or the first reference power is configured by a network or specified by a protocol.

11. The method according to any one of claims 1 to 8, wherein in a case that a configuration mode of the third SSB configuration is the third configuration mode, the third configuration mode satisfies at least one of the following:
each first time unit is configured with an independent SSB transmission power;
a transmission power of a first reference signal on each first time unit is a common transmission power;
each first time unit is configured with an independent power offset of an SSB transmission power;
a power offset of a first reference signal on each first time unit is a common power offset; and
a power offset on each first time unit or the power offset of the first reference signal is an offset relative to a first reference power, wherein the first reference power is a transmission power of a second reference signal on a reference first time unit, or the first reference power is configured by a network or specified by a protocol.

12. The method according to any one of claims 9 to 11, wherein the first reference signal or the second reference signal comprises at least one of the following:
a broadcast signal;
a synchronization signal;
a primary synchronization or secondary synchronization signal; and
another downlink broadcast signal or common reference signal.

13. The method according to any one of claims 1 to 12, wherein the at least one SSB configuration satisfies at least one of the following:
a plurality of intra-band serving cells use a same configuration mode;
a plurality of intra-frequency serving cells use a same configuration mode;
a plurality of inter-band serving cells use independent configuration modes;
a plurality of inter-frequency serving cells use independent configuration modes;
different bands within a same serving cell use a same configuration mode; and
non-contiguous bands within a same serving cell use different configuration modes.

14. The method according to any one of claims 1 to 13, wherein the at least one SSB configuration is carried by network configuration signaling; wherein the network configuration signaling comprises at least one of the following:
system information;
radio resource control RRC signaling;
media access control-control element MAC-CE signaling; and
downlink control information DCI signaling.

15. The method according to claim 14, wherein at least one of the following corresponding to the network configuration signaling is the same as or different from at least one of the following corresponding to a configured SSB: carrier, cell, band, and bandwidth part BWP.

16. A synchronization signal/PBCH block SSB configuration method, comprising:
sending, by a network-side device, at least one SSB configuration to a terminal;
wherein
the at least one SSB configuration comprises at least one of the following:
a first SSB configuration for configuring an SSB resource, a second SSB configuration for configuring an SSB used for radio resource management RRM measurement, and a third SSB configuration for configuring an SSB transmission power; wherein
a configuration mode of the at least one SSB configuration comprises at least one of the following:
a first configuration mode based on an SSB index, a second configuration mode based on an SSB index group, or a third configuration mode based on a plurality of first time units within a first time window.

17. The method according to claim 16, wherein in a case that a configuration mode of the first SSB or a configuration mode of the second SSB configuration is the first configuration mode, the first configuration mode satisfies at least one of the following:
one SSB index corresponds to one or more SSBs;
SSBs corresponding to a same SSB index have a same type or attribute;
each SSB index is configured with an independent periodicity;
periodicities of different SSB indices are in a multiple relationship or a periodicity of each SSB index is a multiple of a minimum time unit;
SSBs corresponding to a same SSB index have fixed resource positions within a period;
resource positions of SSBs corresponding to a same SSB index within a period are determined based on first information, the first information being configured by a network or specified by a protocol;
different SSB indices have a same periodicity, and some SSB indices are deactivated within part of periods within a second time window; and
different SSB indices are configured with a same first periodicity, and some SSB indices are configured with a second periodicity or correspond to a plurality of resource positions within the first periodicity.

18. The method according to claim 17, wherein the first information is used to indicate a position of a time segment within a period for the SSBs corresponding to the same SSB index.

19. The method according to any one of claims 16 to 18, wherein in a case that a configuration mode of the first SSB or a configuration mode of the second SSB configuration is the second configuration mode, the second configuration mode satisfies at least one of the following:
one SSB index in a same SSB index group corresponds to one or more SSBs;
SSBs corresponding to a same SSB index group have a same type or attribute;
the terminal is configured with one or more SSB index groups;
SSB indices in different SSB index groups have a same number;
each SSB index group is configured with an independent number of SSB indices;
SSBs corresponding to different SSB index groups have a same number;
SSBs corresponding to each SSB index group are configured with an independent number;
SSB indices in each SSB index group are consecutive or determined based on second information, the second information being configured by a network or specified by a protocol;
each SSB index group is configured with an independent periodicity;
periodicities of different SSB index groups are in a multiple relationship or a periodicity of each SSB index value is a multiple of a minimum time unit;
SSBs corresponding to a same SSB index group have fixed resource positions within a period;
resource positions of SSBs corresponding to a same SSB index group within a period are determined based on third information, the third information being configured by a network or specified by a protocol;
different SSB index groups have a same periodicity, and some SSB index groups are deactivated within part of periods within a third time window; and
different SSB index groups are configured with a same third periodicity, and some SSB indices are configured with a fourth periodicity or correspond to a plurality of resource positions within the third periodicity.

20. The method according to claim 19, wherein the third information is used to indicate a position of a time segment within a period for the SSBs corresponding to the same SSB index group.

21. The method according to any one of claims 16 to 20, wherein in a case that a configuration mode of the first SSB or a configuration mode of the second SSB configuration is the third configuration mode, the third configuration mode satisfies at least one of the following:
a starting position of the first time unit is configured by a network or specified by a protocol;
a duration of the first time unit is configured by a network or specified by a protocol;
a length of the first time window is equal to a length of an SSB configuration period;
different first time units among the plurality of first time units correspond to different SSB configuration modes; and
an SSB configuration mode corresponding to the first time unit is the first configuration mode or the second configuration mode.

22. The method according to claim 21, wherein the first time unit is related to at least one of the following:
a mapping cycle from an SSB to another reference signal;
an association period from an SSB to another reference signal;
an association pattern period from an SSB to another reference signal;
a radio resource management RRM measurement configuration periodicity;
a configuration periodicity of another reference signal; and
a second time unit configured by a network or specified by a protocol.

23. The method according to any one of claims 16 to 22, wherein a configuration mode of the first SSB configuration is the same as a configuration mode of the second SSB configuration.

24. The method according to any one of claims 16 to 23, wherein in a case that a configuration mode of the third SSB configuration is the first configuration mode, the first configuration mode satisfies at least one of the following:
each SSB index is configured with an independent transmission power;
a transmission power of a first reference signal corresponding to each SSB index is a common transmission power;
each SSB index is configured with an independent power offset;
a power offset of a first reference signal corresponding to each SSB index is a common power offset; and
a power offset of each SSB index or the power offset of the first reference signal is an offset relative to a first reference power, wherein the first reference power is a transmission power of a second reference signal corresponding to a reference SSB index, or the first reference power is configured by a network or specified by a protocol.

25. The method according to any one of claims 16 to 24, wherein in a case that a configuration mode of the third SSB configuration is the second configuration mode, the second configuration mode satisfies at least one of the following:
each SSB index group is configured with an independent transmission power;
a transmission power of a first reference signal corresponding to each SSB index group is a common transmission power;
each SSB index group is configured with an independent power offset;
a power offset of a first reference signal corresponding to each SSB index group is a common power offset; and
a power offset of each SSB index group or the power offset of the first reference signal is an offset relative to a first reference power, wherein the first reference power is a transmission power of a second reference signal corresponding to a reference SSB index group, or the first reference power is configured by a network or specified by a protocol.

26. The method according to any one of claims 16 to 24, wherein in a case that a configuration mode of the third SSB configuration is the third configuration mode, the third configuration mode satisfies at least one of the following:
each first time unit is configured with an independent SSB transmission power;
a transmission power of a first reference signal on each first time unit is a common transmission power;
each first time unit is configured with an independent power offset of an SSB transmission power;
a power offset of a first reference signal on each first time unit is a common power offset; and
a power offset on each first time unit or the power offset of the first reference signal is an offset relative to a first reference power, wherein the first reference power is a transmission power of a second reference signal on a reference first time unit, or the first reference power is configured by a network or specified by a protocol.

27. The method according to any one of claims 24 to 26, wherein the first reference signal or the second reference signal comprises at least one of the following:
a broadcast signal;
a synchronization signal;
a primary synchronization or secondary synchronization signal; and
another downlink broadcast signal or common reference signal.

28. The method according to any one of claims 16 to 27, wherein the at least one SSB configuration satisfies at least one of the following:
a plurality of intra-band serving cells use a same configuration mode;
a plurality of intra-frequency serving cells use a same configuration mode;
a plurality of inter-band serving cells use independent configuration modes;
a plurality of inter-frequency serving cells use independent configuration modes;
different bands within a same serving cell use a same configuration mode; and
non-contiguous bands within a same serving cell use different configuration modes.

29. The method according to any one of claims 16 to 28, wherein the at least one SSB configuration is carried by network configuration signaling; wherein the network configuration signaling comprises at least one of the following:
system information;
radio resource control RRC signaling;
media access control-control element MAC-CE signaling; and
downlink control information DCI signaling.

30. The method according to claim 29, wherein at least one of the following corresponding to the network configuration signaling is the same as or different from at least one of the following corresponding to a configured SSB: carrier, cell, band, and bandwidth part BWP.

31. A synchronization signal/PBCH block SSB configuration apparatus, comprising:
a communication unit configured to receive at least one SSB configuration from a network-side device; wherein
the at least one SSB configuration comprises at least one of the following:
a first SSB configuration for configuring an SSB resource, a second SSB configuration for configuring an SSB used for radio resource management RRM measurement, and a third SSB configuration for configuring an SSB transmission power; wherein
a configuration mode of the at least one SSB configuration comprises at least one of the following:
a first configuration mode based on an SSB index, a second configuration mode based on an SSB index group, or a third configuration mode based on a plurality of first time units within a first time window.

32. The apparatus according to claim 31, wherein in a case that a configuration mode of the first SSB or a configuration mode of the second SSB configuration is the first configuration mode, the first configuration mode satisfies at least one of the following:
one SSB index corresponds to one or more SSBs;
SSBs corresponding to a same SSB index have a same type or attribute;
each SSB index is configured with an independent periodicity;
periodicities of different SSB indices are in a multiple relationship or a periodicity of each SSB index is a multiple of a minimum time unit;
SSBs corresponding to a same SSB index have fixed resource positions within a period;
resource positions of SSBs corresponding to a same SSB index within a period are determined based on first information, the first information being configured by a network or specified by a protocol;
different SSB indices have a same periodicity, and some SSB indices are deactivated within part of periods within a second time window; and
different SSB indices are configured with a same first periodicity, and some SSB indices are configured with a second periodicity or correspond to a plurality of resource positions within the first periodicity.

33. The apparatus according to claim 31 or 32, wherein in a case that a configuration mode of the first SSB or a configuration mode of the second SSB configuration is the second configuration mode, the second configuration mode satisfies at least one of the following:
one SSB index in a same SSB index group corresponds to one or more SSBs;
SSBs corresponding to a same SSB index group have a same type or attribute;
a terminal is configured with one or more SSB index groups;
SSB indices in different SSB index groups have a same number;
each SSB index group is configured with an independent number of SSB indices;
SSBs corresponding to different SSB index groups have a same number;
SSBs corresponding to each SSB index group are configured with an independent number;
SSB indices in each SSB index group are consecutive or determined based on second information, the second information being configured by a network or specified by a protocol;
each SSB index group is configured with an independent periodicity;
periodicities of different SSB index groups are in a multiple relationship or a periodicity of each SSB index value is a multiple of a minimum time unit;
SSBs corresponding to a same SSB index group have fixed resource positions within a period;
resource positions of SSBs corresponding to a same SSB index group within a period are determined based on third information, the third information being configured by a network or specified by a protocol;
different SSB index groups have a same periodicity, and some SSB index groups are deactivated within part of periods within a third time window; and
different SSB index groups are configured with a same third periodicity, and some SSB indices are configured with a fourth periodicity or correspond to a plurality of resource positions within the third periodicity.

34. The apparatus according to any one of claims 31 to 33, wherein in a case that a configuration mode of the first SSB or a configuration mode of the second SSB configuration is the third configuration mode, the third configuration mode satisfies at least one of the following:
a starting position of the first time unit is configured by a network or specified by a protocol;
a duration of the first time unit is configured by a network or specified by a protocol;
a length of the first time window is equal to a length of an SSB configuration period;
different first time units among the plurality of first time units correspond to different SSB configuration modes; and
an SSB configuration mode corresponding to the first time unit is the first configuration mode or the second configuration mode.

35. A synchronization signal/PBCH block SSB configuration apparatus, comprising:
a communication unit configured to send at least one SSB configuration to a terminal; wherein
the at least one SSB configuration comprises at least one of the following:
a first SSB configuration for configuring an SSB resource, a second SSB configuration for configuring an SSB used for radio resource management RRM measurement, and a third SSB configuration for configuring an SSB transmission power; wherein
a configuration mode of the at least one SSB configuration comprises at least one of the following:
a first configuration mode based on an SSB index, a second configuration mode based on an SSB index group, or a third configuration mode based on a plurality of first time units within a first time window.

36. The apparatus according to claim 35, wherein in a case that a configuration mode of the first SSB or a configuration mode of the second SSB configuration is the first configuration mode, the first configuration mode satisfies at least one of the following:
one SSB index corresponds to one or more SSBs;
SSBs corresponding to a same SSB index have a same type or attribute;
each SSB index is configured with an independent periodicity;
periodicities of different SSB indices are in a multiple relationship or a periodicity of each SSB index is a multiple of a minimum time unit;
SSBs corresponding to a same SSB index have fixed resource positions within a period;
resource positions of SSBs corresponding to a same SSB index within a period are determined based on first information, the first information being configured by a network or specified by a protocol;
different SSB indices have a same periodicity, and some SSB indices are deactivated within part of periods within a second time window; and
different SSB indices are configured with a same first periodicity, and some SSB indices are configured with a second periodicity or correspond to a plurality of resource positions within the first periodicity.

37. The apparatus according to claim 35 or 36, wherein in a case that a configuration mode of the first SSB or a configuration mode of the second SSB configuration is the second configuration mode, the second configuration mode satisfies at least one of the following:
one SSB index in a same SSB index group corresponds to one or more SSBs;
SSBs corresponding to a same SSB index group have a same type or attribute;
the terminal is configured with one or more SSB index groups;
SSB indices in different SSB index groups have a same number;
each SSB index group is configured with an independent number of SSB indices;
SSBs corresponding to different SSB index groups have a same number;
SSBs corresponding to each SSB index group are configured with an independent number;
SSB indices in each SSB index group are consecutive or determined based on second information, the second information being configured by a network or specified by a protocol;
each SSB index group is configured with an independent periodicity;
periodicities of different SSB index groups are in a multiple relationship or a periodicity of each SSB index value is a multiple of a minimum time unit;
SSBs corresponding to a same SSB index group have fixed resource positions within a period;
resource positions of SSBs corresponding to a same SSB index group within a period are determined based on third information, the third information being configured by a network or specified by a protocol;
different SSB index groups have a same periodicity, and some SSB index groups are deactivated within part of periods within a third time window; and
different SSB index groups are configured with a same third periodicity, and some SSB indices are configured with a fourth periodicity or correspond to a plurality of resource positions within the third periodicity.

38. The apparatus according to any one of claims 35 to 37, wherein in a case that a configuration mode of the first SSB or a configuration mode of the second SSB configuration is the third configuration mode, the third configuration mode satisfies at least one of the following:
a starting position of the first time unit is configured by a network or specified by a protocol;
a duration of the first time unit is configured by a network or specified by a protocol;
a length of the first time window is equal to a length of an SSB configuration period;
different first time units among the plurality of first time units correspond to different SSB configuration modes; and
an SSB configuration mode corresponding to the first time unit is the first configuration mode or the second configuration mode.

39. A terminal, comprising a transceiver, a processor, and a memory, wherein the memory stores a program or instructions capable of running on the processor, and when the program or instructions are executed by the processor, the SSB configuration method according to any one of claims 1 to 15 is implemented.

40. A network-side device, comprising a transceiver, a processor, and a memory, wherein the memory stores a program or instructions capable of running on the processor, and when the program or instructions are executed by the processor, the SSB configuration method according to any one of claims 15 to 30 is implemented.

41. A readable storage medium, wherein the readable storage medium stores a program or instructions, and when the program or instructions are executed by a processor, the SSB configuration method according to any one of claims 1 to 15 is implemented, or the SSB configuration method according to any one of claims 16 to 30 is implemented.
